# EUROPEAN PATENT SPECIFICATION

(11) **EP 0 733 829 B1**
(45) Date of publication and mention of the grant of the patent: **19.12.2001**
(21) Application number: 96104516.8
(22) Date of filing: 21.03.1996
(51) Int. Cl.: F16H 61/00, F16H 37/08

(54) **Continuously variable transmission**
Stufenloses Getriebe
Transmission à variation continue

(30) Priority: 24.03.1995 JP 6623495
(43) Date of publication of application: 25.09.1996
(73) Proprietor: AISIN AW CO., LTD., Anjo-shi Aichi-ken (JP)
(72) Inventor: Moroto, Shuzo, Anjo-shi, Aichi-ken, 444-11 (JP); Taniguchi, Takao, Anjo-shi, Aichi-ken, 444-11 (JP); Miyagawa, Shoichi, Anjo-shi, Aichi-ken, 444-11 (JP); Sakakibara, Shiro, Anjo-shi, Aichi-ken, 444-11 (JP); Tsukamoto, Kazumasa, Anjo-shi, Aichi-ken, 444-11 (JP); Inuzuka, Takeshi, Anjo-shi, Aichi-ken, 444-11 (JP); Hattori, Masashi, Anjo-shi, Aichi-ken, 444-11 (JP)
(74) Representative: VOSSIUS & PARTNER

(56) References cited:
- EP-A- 0 245 079
- EP-A- 0 304 085
- EP-A- 0 447 801
- DE-A- 4 107 739
- GB-A- 1 603 853
- GB-A- 2 284 870
- US-A- 4 990 127
- US-A- 5 005 442
- US-A- 5 045 028
- PATENT ABSTRACTS OF JAPAN vol. 011, no. 057 (M-564), 21 February 1987 & JP 61 218860 A (AISIN WARNER), 29 September 1986,

## Description

This invention relates to a continuously variable transmission using a belt type continuously variable transmission in which a belt is wound around a primary pulley and a secondary pulley, each of which is composed of two sheaves and, more particularly, to a continuously variable transmission, suitable for a transmission system for an automobile, specifically, in which the belt type continuously variable transmission and a planetary gear unit are combined.

An automatic continuously variable transmission assembled with a belt type continuously variable transmission device calls attentions as a transmission system for an automobile these days on demand of such as improvements for fuel consumption rate and driveability.

A continuously variable transmission had conventionally been proposed in which a belt type continuously variable transmission and a planetary gear unit are combined to augment gearshift ranges as, for example, disclosed in Japanese Patent Application Laid-Open No. 59-110,954. With a continuously variable transmission of such a type, a gear ratio of a power transmission path or mechanism such as the planetary gearing can possibly be set so that the continuously variable transmission delivers zero output as a whole at a certain speed-change (pulley) ratio of the belt type continuously variable transmission. In such a case, where the belt type continuously variable transmission is controlled to operate with the certain speed-change ratio (target pulley ratio), the continuously variable transmission does not theoretically transmit any torque (normal and reverse rotations) from the engine to vehicle wheels, as well as does enter in a non-drive state (i.e., a state that a manual clutch is disengaged) that the engine brake does not operate. During such a non-drive state, however, the output torque greatly varies simply when the belt type continuously variable transmission deviates even slightly from the target pulley ratio, because the output torque diverges to infinity in relation that the output of the continuously variable transmission becomes zero. It is therefore difficult in a practical sense to produce the non-drive state by setting the target pulley ratio as a single point through changing and controlling the axial forces exerted on both pulleys of the belt type continuously variable transmission.

In the continuously variable transmission disclosed in the above publication, the gear ratio of the power transmission path such as a planetary gear unit is set to a value excluding zero such as 0.4 to 4 (i.e., does not rotate normally and reversely), and the continuously variable transmission is equipped with a torque converter with a direct coupling clutch (drive starter device) and a clutch brake for switching normal, or forward, and reverse rotation (normal and reverse rotation switching device).

With such a continuously variable transmission, during operation of the normal rotation, the engine delivers the engine torque to the primary pulley of the belt type continuously variable transmission through the torque converter and the clutch for normal rotation, as well as to a certain rotary gear element (sun gear) of the planetary gear unit, and thereby the planetary gear unit amplifies the output rotation of the belt type continuously variable transmission and delivers it to a differential device. During the reverse rotation, the normal and reverse rotation switching device cuts off the power transmission before the belt type continuously variable transmission and holds the rotation in a stop state. The rotation is transmitted to a certain rotary element or elements of the planetary gear unit through the torque converter to take out the reverse rotation during the stop state.

The above described continuously variable transmission, however, requires the normal and reverse rotation switching device and the driving starter device such as a torque converter and thereby becomes disadvantaged that much in terms of costs, and also the continuously variable transmission disturbs itself from becoming more compact in size, thereby making itself disadvantaged in mountability on an automobile.

GB-A-1603853, forming the preamble of claims 1, 3 and 5 relates to continuously variable-ratio transmissions having a pair of pulleys of variable effective diameter interconnected by an endless drive band and each connected to drive a respective one of two of the elements of an epicyclic gearset. This transmission includes means for monitoring the torque in an output shaft of the transmission, means for controlling the ratio provided by the pulleys, and feed back means operable in accordance with the torque in the output shaft to bias said control means in such a manner as to oppose the generation of the torque.

EP-A-0245079 describes a belt driven continuously variable transmission unit which converts the rotation of an input member by continuously variable ratios, and a gear unit such as a planetary gear unit to which the output torque from the continuously variable transmission unit and torque from the input member transmitted through a transfer unit is fed and delivered to the output member. A selector means comprising a clutch and arresting means is provided on the input path of the gear unit from the transfer unit. When the selector means is switched to low speed mode, the gear unit functions as a reduction mechanism, whereas when the selecting means is switched to high speed mode, the gear unit functions as a split-drive mechanism which combines the output torque from the continuously variable transmission unit with the torque transmitted through said transfer unit. Formation of torque loop is prevented while combining the torques, by driving the element of the gear unit which supports reaction when the gear unit is functioning as a reduction mechanism.

It is an object of the invention to provide a continuously variable transmission constituted so that a belt type continuously variable transmission thereof automatically converges to a position to provide a zero output (a non-drive state) even where the continuously variable transmission and a planetary gear unit are combined to produce a torque circulation. This object is achieved with the features of the claims.

The continuously variable transmission according to the invention includes an input shaft operative in association with an engine output shaft, an output shaft operative in association with wheels, a belt type continuously variable transmission operative in association with the input shaft having primary pulley and secondary pulleys and axial force operating means for applying axial forces to both pulleys, a planetary gear unit having first to third rotary elements operative in association with the input shaft, the secondary pulley, and the output shaft, respectively, judging means for judging output toque's state, and controlling means for switching the axial force operating means. The belt type continuously variable transmission is capable of changing the pulley ratio between both pulleys by operation of axial force operating means. The planetary gear unit changes its torque transmission direction based on the pulley ratio to change the output torque direction of the output shaft. Based on a signal from detecting means for detecting vehicle driving state, the judging means provides a signal to the controlling means to control the axial force operating means. The axial force operating means is controlled to produce an axial force difference to achieve a target pulley ratio during a drive state requiring the output torque and to equalize the axial forces during a non-drive state not requiring the output torque. The belt type continuously variable transmission then self-converges so that the output from the output shaft becomes zero and is stably held at the neutral position with no drive starter device. Therefore, the belt type continuously variable transmission makes itself simple and smaller with reduced costs and improved mountability on the vehicle. The planetary gear unit is constituted of a single or dual pinion planetary gearing including a sun gear, a carrier, and a ring gear, each corresponding to one of three rotary elements.

According to an embodiment of the invention, the axial force operating means includes a primary hydraulic servo operative to the primary pulley and a secondary hydraulic servo operative to the secondary pulley, and each of the primary and secondary hydraulic servos includes a plurality of hydraulic chambers. The controlling means makes effective pressure receiving areas of the respective servos different during the drive state and equal during the non-drive state by selectively switching hydraulic supply to the respective hydraulic chambers. Each hydraulic servo may include a primary hydraulic chamber and a secondary hydraulic chamber, and the primary hydraulic chambers of both hydraulic servos have the same effective pressure receiving area. The controlling means controls a regulator valve and a ratio control valve, and hydraulic pressure from the ratio control valve is supplied to either one of the secondary hydraulic chambers during the drive state and is discharged from both secondary hydraulic chamber during the non-drive state. The regulator valve can be constituted of primary and secondary regulator valves, and during the drive state both of the regulator valve operate whereas during the non-drive state only one of the regulator valves operates. The primary regulator valve may be in communication with the secondary regulator valve, and during the non-drive state, the secondary regulator valve has a larger output hydraulic pressure than the primary regulator valve. This control mechanism allows the drive and non-drive states to be switched simply and easily by changing effective pressure receiving areas of the respective hydraulic servos without adjusting the hydraulic pressure to be supplied to the hydraulic servos.

Where the detecting means includes a vehicle speed sensor for detecting vehicle speed and a throttle sensor for detecting throttle opening of the engine, the judging means determines as the output torque is not required, when the vehicle speed is at a predetermined amount or less (V < V0) and when the throttle opening is at a predetermined amount or less (θ = Idle).

According to an embodiment of the invention, during a low speed mode, the first rotary element, the second rotary element, and the third rotary element in the planetary gear unit are operative in association with the input shaft, the secondary pulley, and the output shaft, respectively, and during a high speed mode the operational association between the first rotary element and the input shaft is cut off and the secondary pulley is coupled to the output shaft. The input shaft may be coupled respectively to the primary pulley and the first element so that the torque direction at the input shaft of the torque transmitted from the primary pulley is in the reverse direction to the torque direction at the input shaft of the torque transmitted from the first element during the drive state. The output shaft produces output in the normal and reverse directions with a neutral position placed therebetween in which output rotational speed becomes zero by changing the pulley ratio of the belt type continuously variable transmission. The output shaft is changed at the low speed mode sequentially in the reverse rotation, the neutral position, and the normal rotational overdrive by changing the pulley ratio of the belt type continuously variable transmission toward an underdrive direction and at the high speed mode in the normal rotational overdrive direction by changing the pulley ratio of the belt type continuously variable transmission toward an overdrive direction.

In another aspect of the invention, the controlling means for switching, based on the judging means, the difference between the axial forces on both pulleys produced by the axial force operating means to, during the drive state, a value to achieve a target pulley ratio with respect to the input torque of the belt type continuously variable transmission at that time and, during the non-drive state, a smaller value within a range not reversing a relation between the amounts of the axial forces on both pulleys than the difference between the axial forces on both pulleys determined by the input torque and the pulley ratio of the belt type continuously variable transmission at that time when the output torque direction of the output shaft is positive or negative. The non-drive state can be created in substantially the same manner as the above, so that the same neutral control can be implemented without precisely holding the axial forces on both pulleys by placing a pre-load spring or the like.

The above and other objects and features of the invention are apparent to those skilled in the art from the following preferred embodiments thereof when considered in conjunction with the accompanied drawings, in which:
Figs. 1(a), 1(b) are a skeleton diagram and a speed diagram, respectively, showing an embodiment of a power transmission mechanism of a continuously variable transmission (CVT) according to the invention;
Fig. 2 is a diagram showing change of output torque in relation to torque ratio of the belt type continuously variable transmission;
Fig. 3 is a diagram showing change of output rotational speed in relation to torque ratio of the CVT;
Fig. 4 is a hydraulic circuit diagram showing an embodiment of a control mechanism in the CVT according to the invention;
Fig. 5 is an operation schedule showing the operation of the circuit in Fig. 4;
Fig. 6 is a flowchart for a general routine of control of the CVT;
Fig. 7 is a flowchart showing the neutral control in the general routine in Fig. 6;
Fig. 8 is diagram showing axial force balance of primary and secondary pulleys of the embodiment in Fig. 1;
Figs. 9(a), 9(b) are a diagram showing axial force balance when secondary side axial force Fs is constant and a diagram showing the neutral control range, respectively;
Fig. 10 is a diagram showing change of line pressure in relation to torque ratio of CVT;
Fig. 11 is a hydraulic circuit diagram showing another embodiment of the control mechanism;
Fig. 12 is an operation schedule showing the operation of the control mechanism in Fig. 11;
Fig. 13 is a flowchart showing the neutral control of the control mechanism in Fig. 11; and
Figs. 14(a), 14(b) to 20(a), 20(b) are skeleton and speed diagrams showing other embodiments of the power transmission mechanisms, respectively, wherein (a) is for skeleton diagrams and (b) is for speed diagrams.

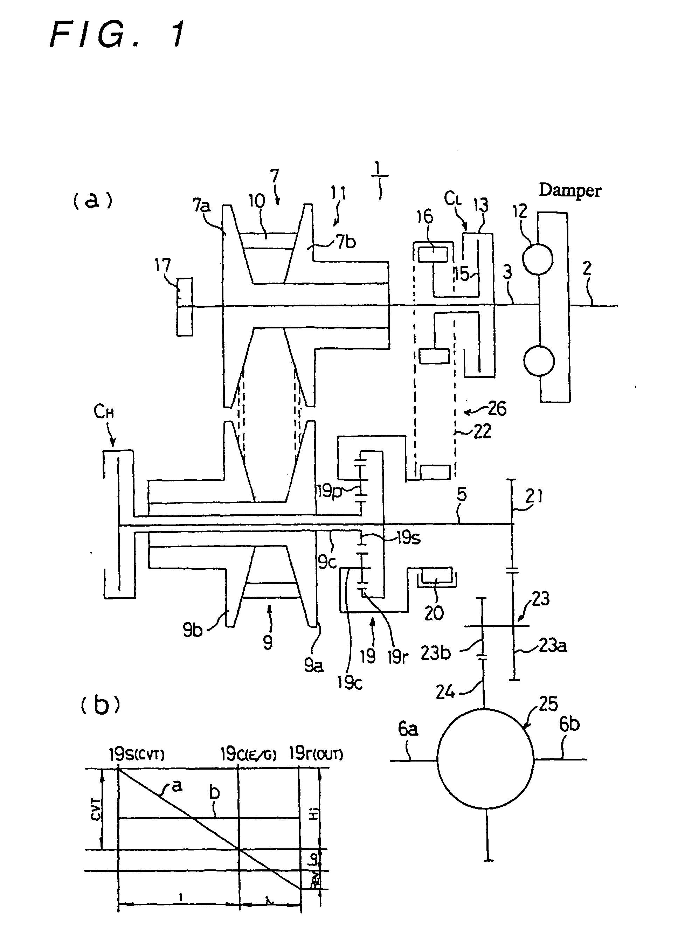

Referring to Fig. 1(a), a power transmission mechanism of a continuously variable transmission according to the invention is described. An automatic continuously variable transmission system 1 for a vehicle includes a first shaft 3 aligned with an engine crankshaft 2, a second shaft 5, and third shafts 6 (a, b) aligned with front wheel shafts. In a belt type continuously variable transmission (hereinafter simply referred as to "CVT" ) 11, a primary pulley 7 is supported on the first shaft 3; the secondary pulley 9 is supported on the second shaft 5; a belt 10 is wound around both pulleys 7, 9.

The first shaft 3 is coupled to the engine crankshaft 2 through a damper 12 to form an input shaft. An input side member 13 of a low clutch C_{L} is secured to the input shaft 3 while an output side member 15 is rotatably supported on the input shaft 3. A primary side sprocket 16 is coupled unitedly to the output side member 15 to form power transmission means. A stable sheave 7a of the primary pulley 7 is secured on the input shaft 3, to the tip of which an oil pump 17 is connected. A movable sheave 7b is supported to the stable sheave 7a so as to be movable in the axial direction. The secondary pulley 9 is rotatably supported on the second shaft 5. The secondary pulley 9 includes a stable sheave 9a, a movable sheave 9b supported on the stable sheave 9a so as to be movable in the axial direction, and a secondary shaft 9c coupled unitedly with the stable sheave. A high clutch CH is located between the second shaft 5 and secondary shaft 9c. A planetary gear unit 19 is formed on the second shaft 5. A secondary side sprocket 20 is rotatably supported on the second shaft 5. An output gear 21 is secured on an end of the second shaft 5 to form an output shaft.

The planetary gear unit 19 is formed of a single pinion planetary gearing including a sun gear 19s, a ring gear 19r, and a carrier 19c rotatably supporting pinions 19p each meshing with both gears. The sun gear 19s is coupled to the secondary shaft 9c to form a second rotary element; the ring gear 19r is coupled to the output shaft 5 to form a third rotary element; the carrier 19c is coupled to the secondary side sprocket 20 to form a first rotary element. A winding body 22, such as a silent chain, a roller chain, or a timing belt, is wound around the primary and secondary side sprockets 16, 20. The gear 21 secured to the output shaft 5 meshes with a large gear 23a of an underdrive gear unit 23, whose small gear 23b meshes with a ring gear 24 of a differential device 25, and the differential device 25 outputs differential rotations respectively to left and right axle shafts 6a, 6b forming the third shafts.

Referring to Figs. 1(a), 1(b), 2, 3, operation based on the power transmission mechanism of the continuously variable transmission system 1 is described. The rotation of the engine crankshaft 2 is transmitted to the input shaft 3 through the damper 12. At the low mode in which the low clutch C_{L} is engaged and which the high clutch CH is disengaged, the rotation of the input shaft 3 is transmitted to the primary pulley 7 and to the carrier 19c of the planetary gear unit 19 through a power transmitting device 26 constituted of the primary side sprocket 16, the winding body 22, and the secondary side sprocket 20. The rotation of the primary pulley 7 is transmitted to the secondary pulley 9 in continuously changing the speed by way of properly controlling the pulley ratio between the primary and secondary pulleys by axial force operating means made of such as hydraulic servos as described below. The changed speed rotation of the pulley 9 is transmitted to the sun gear 19s of the planetary gear unit 19.

As shown in a speed diagram of Fig. 1(b), in the planetary gear unit 19, the continuously changed speed rotation from the CVT 11 is transmitted to the sun gear 19s while the carrier 19c serves as a counter force element to which a constant speed rotation is transmitted through the power transmission device 26. The rotations of the carrier 19c and the sun gear 19s are integrated and transmitted to the output shaft 5 through the ring gear 19r. Since the ring gear 19r as a rotary element and not as an element supporting the counter force is coupled to the output shaft 5 at that time, the planetary gear unit 19 produces a torque circulation and renders the output shaft 5 rotate in normal or forward rotation (Lo) and reverse rotation (Rev) directions via a zero rotation placed therebetween because the sun gear 19s and the carrier 19c rotate in the same direction. In other words, based on the torque circulation, the torque in the CVT 11 is transmitted from the secondary pulley 9 to the primary pulley 7 in a state that the output shaft 5 rotates in the normal (forward) direction and transmitted form the primary pulley 7 to the secondary pulley 9 in a state that the output shaft rotates in the reverse (rearward) direction.

At the high mode in which the low clutch C_{L} is disengaged and which the high clutch C_{H} is engaged, the transmission through the power transmission device 26 to the planetary gear unit 19 is cut off, and the planetary gear unit 19 enters in a unitedly rotating state by engagement of the high clutch C_{H}. The rotation of the input shaft 3 is therefore transmitted to the output shaft 5 exclusively through the CVT 11 and the high clutch C_{H}. The rotation of the output shaft 5 is transmitted to the differential device 25 through the output gear 21 and the underdrive gear unit 23 and then transmitted to the left and right front wheels through the left and right axle shafts 6a, 6b.

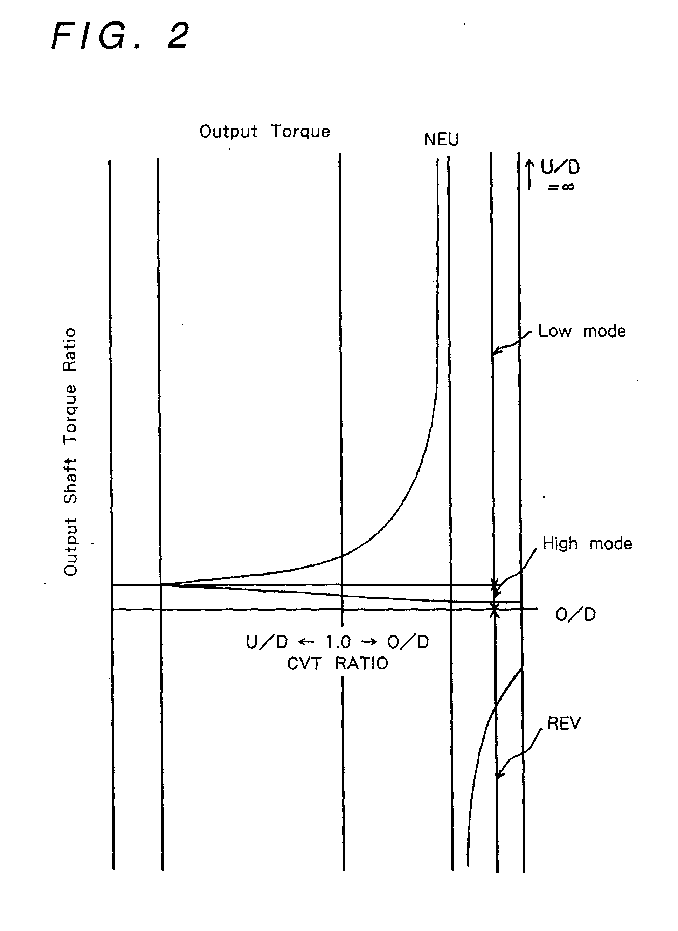

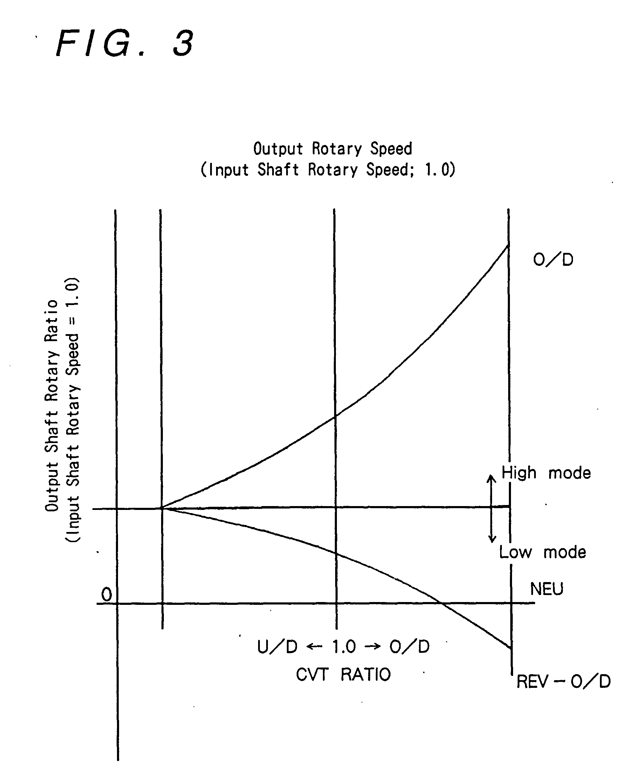

At the low mode, as shown in the speed diagram of Fig. 1(b), an output torque diagram of Fig. 2. and an output speed diagram of Fig. 3, when the CVT 11 indicates a limitation (O / D edge) in an overdrive, or speed increment, direction (or located on line a in Fig. 1). the ring gear 19r is reversely rotated against the rotation of the carrier 19c rotating with a constant speed based on that the sun gear 19s rotates in a maximum way, and the reverse rotation (REV) is transmitted to the output shaft 5. When the CVT 11 is moved to an underdrive, or speed reduction, direction, the reversed rotational speed is reduced, and the transmission system 1 enters the neutral position (NEU) at which the speed of the output shaft 5 becomes zero at a predetermined pulley ratio determined by the gear ratio of the planetary gear unit 19 and the power transmission device 26. When the CVT 11 is further moved toward the underdrive direction, the ring gear 19r is switched to rotate in the normal rotation direction, and the normal rotation, or the rotation in the forward direction, is transmitted to the output shaft 5. As apparent from the axis for output torque in Fig. 2, the torque of the output shaft 5 diverges to infinite around the neutral position NEU.

When the CVT 11 indicates an edge of the underdrive direction (U / D), the high clutch C_{H} is engaged to select the high mode. At the high mode, the output rotation of the CVT 11 is transmitted as it is to the output shaft 5, so that a parallel line indicated by b in the speed diagram of Fig. 1(b) is obtained. As the CVT 11 changes its speed in the overdrive direction, the rotation of the output shaft 5 is now also changed toward the overdrive direction, and thereby the transmission torque is reduced that much. It is to be noted that numeral λ in Fig. 1(b) represents a ratio (Zs / Zr) between the tooth number of the sun gear and the tooth number of the ring gear.

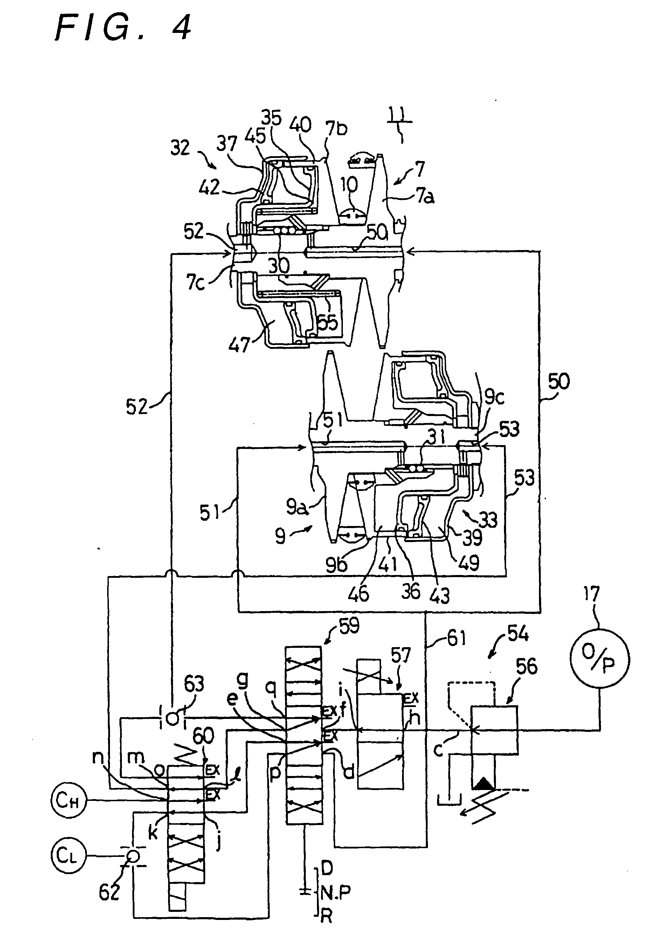

Referring to Fig. 4, a control mechanism of the continuously variable transmission according to the invention is described. In the primary and secondary pulleys 7, 9, the movable sheaves 7b, 9b are supported on boss portions 7c, 9c of the stable sheaves 7a, 9a by ball splines 30, 31, respectively, so as to be movable in the axial direction. The hydraulic servos 32, 33 forming the axial force operating means to exert axial forces respectively to the pulleys are disposed behind the movable sheaves 7b, 9b. Both hydraulic servos 32, 33 include diaphragms 35, 36 and cylinders 37, 39 secured to the stable sheave boss portions 7c, 9c, and drum members 40, 41 and second piston members 42, 43 secured behind the movable sheaves 7b, 9b, respectively; the diaphragms 35, 36 are fitted in the drum members 40, 41 in an oil-tight manner, respectively; the second piston members 42, 43 are fitted in the cylinders 37, 39 and diaphragms 35, 36 in an oil-tight manner, respectively; the hydraulic servos 32, 33 have a double piston structure composed of primary hydraulic chambers 45, 46 and secondary hydraulic chambers 47, 49.

In the primary hydraulic chambers 45, 46 in the hydraulic servos 32, 33, the back faces of the movable sheaves 7b, 9b constitute piston faces. The effective pressure receiving areas of the piston faces are equal between the primary side and the secondary side. The stable sheave boss portions 7c, 9c on the primary side and the secondary side are formed with hydraulic passages 50 to 53 in hydraulically communication with the primary hydraulic chambers 45, 46 and the secondary hydraulic chambers 47, 49. A spring 55 for pre-loading is arranged in a contracted manner at the primary hydraulic chamber 45 of the primary side hydraulic servo 32.

The control mechanism 54 serving as controlling means of the embodiment includes a regulator valve 56, a ratio control valve 57, a manual valve 59, and a low and high control valve 60. The hydraulic pressure from the oil pump 17 is properly adjusted, or regulated, at the control mechanism 54 and switched, thereby being supplied to the primary and secondary hydraulic chambers 45, 46, 47, 49 of the hydraulic servos 32, 33 and to the low clutch (or its servo) C_{L} and the high clutch (or its servo) C_{H}.

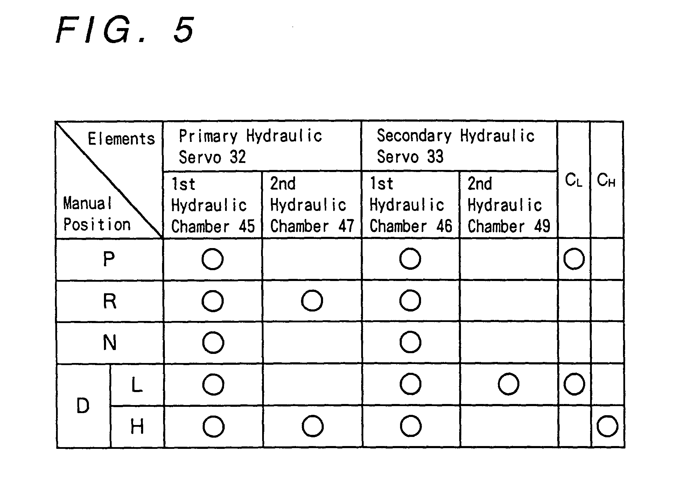

Now referring to Figs. 4 to 10, the operation of the control mechanism 54 is described as follows. As shown in Fig. 5, during the low (L) mode of the D range, predetermined hydraulic pressure is supplied to the primary hydraulic chamber 45 of the primary side hydraulic servo 32; predetermined hydraulic pressure operate to both of the primary hydraulic chamber 46 and the secondary hydraulic chamber 49 of the secondary side hydraulic servo 33; and the low clutch C_{L} is engaged by operation of the hydraulic pressure. That is, the regulator valve 56 controls the hydraulic pressure from the oil pump 17, and the adjusted output hydraulic pressure from the output port c operates to the primary hydraulic chamber 45 of the primary side hydraulic servo 32 through the hydraulic passages 61, 50, 51 and to the primary hydraulic chamber 46 of the secondary side hydraulic servo 33.

During the low mode, the manual valve 59 is manipulated to take D position and communicate a port d with a port e and a port f with a port g. The ratio control valve 57 is switched and held at a position to communicate a port h with a port i; the low and high control valve 60 is switched and held at a position to communicate a port j with a port k and a port 1 with a port m. The adjusted hydraulic pressure from the output port c is supplied to the secondary hydraulic chamber 49 of the secondary side hydraulic servo 33 through the ports h, i of the ratio control valve 57, the ports f, g of the manual valve 59, and the ports l, m of the low and high control valve 60 and supplied to a hydraulic servo C_{L} for the low clutch through the ports d, e of the manual valve 59, the ports j, k of the low and high control valve 60, and a mutual check valve 62.

Thus, as the low clutch C_{L} is engaged, the axial force produced by the secondary side hydraulic servo 33 in which the hydraulic pressure operates to both of the primary and secondary hydraulic chambers 46, 49 becomes larger than the axial force produced by the primary side hydraulic servo 32 in which the hydraulic pressure operates only to the primary hydraulic chamber 45 in the CVT 11. The axial forces produced by both hydraulic servos 32, 33 are adjusted as desired by properly controlling the opening of the ratio control valve 57 while the CVT 11 is in an axial force state by both pulleys 7, 9 corresponding o the torque transmission from the secondary pulley 9 to the primary pulley 7, hereby changing the pulley ratio (torque ratio) as desired. In this situation, the engine torque transmitted from the input shaft 3 to the carrier 19c of the planetary gear unit 19 through the low clutch C_{L} and the power transmission mechanism 26 is taken out at the output shaft 5 through the ring gear 19r in being subject to a restriction at the CVT 11 due to the obtained pulley ratio.

During the high (H) mode of the D range, as shown in Fig. 5, predetermined hydraulic pressure is supplied to the primary and secondary hydraulic chambers 45, 47 of the primary side hydraulic servo 32 and supplied to the primary hydraulic chamber 46 of the secondary side hydraulic servo 33, as well as to a hydraulic servo C_{H} for the high clutch. That is, the adjusted output hydraulic pressure from the output port c of the regulator valve 56 is supplied to the primary hydraulic chamber 45, 46 of the primary and secondary side hydraulic servos 32, 33 through the hydraulic passages 61, 50, 51.

Though the ratio control valve 57 and the manual valve 59 are positioned at the same places as of the low mode at the high mode, the low and high control valve 60 is switched to take a position to communicate the port j with a port n and the port 1 with a port o. The adjusted hydraulic pressure from the output port c is supplied to the secondary hydraulic chamber 47 of the primary side hydraulic servo 32 through the ports h, I of the ratio control valve 57, the ports f, g of the manual valve 59, the ports l, o of the low and high control valve 60, a mutual check valve 63, and the hydraulic passage 52 and supplied to a hydraulic servo C_{H} for the high clutch through the ports d, e of the manual valve 59, the ports j, n of the low and high control valve 60.

Consequently, in the CVT 11, the axial force produced by the primary side hydraulic servo 32 in which the hydraulic pressure operates to both of the primary and secondary hydraulic chambers 45, 47 becomes larger than the axial force produced by the secondary side hydraulic servo 33 in which the hydraulic pressure operates only to the primary hydraulic chamber 46, and the axial forces produced by both hydraulic servos 32, 33 are properly adjusted by properly controlling the opening of the ratio control valve 57 while the CVT 11 is in an axial force state corresponding to the torque transmission from the secondary pulley 9 to the primary pulley 7, thereby achieving the pulley ratio (torque ratio) as desired. In this situation, the engine torque transmitted from the input shaft 3 is properly changed by the CVT 11 transmitting it from the primary pulley 7 to the secondary pulley 9 and is taken out at the output shaft 5 through the high clutch CH.

With the reverse range (R), as shown in Fig. 5, predetermined hydraulic pressure is supplied to the primary and secondary hydraulic chambers 45, 47 of the primary side hydraulic servo 32 and supplied to the primary hydraulic chamber 46 of the secondary side hydraulic servo 33, as well as to the hydraulic servo C_{L} for the low clutch. That is, the adjusted output hydraulic pressure from the output port c of the regulator valve 56 is supplied to the primary hydraulic chamber 45, 46 of the primary and secondary side hydraulic servos 32, 33 through the hydraulic passages 61, 50, 51. At the reverse range, though the ratio control valve 57 is positioned at the same place as described above, the manual valve 59 is manipulated to take R position to communicate the port d with a port p and the port f with a port q. The low and high control valve 60 is notedly irrelevant to the control of the reverse range. The adjusted hydraulic pressure from the output port c is supplied to the hydraulic servo C_{L} for the low clutch through the ports d, p of the manual valve 59 and the mutual check valve 62 and is supplied to the secondary hydraulic chamber 47 of the primary side hydraulic servo 32 through the ports h, i of the ratio control valve 57, the ports f, q of the manual valve 59, the mutual check valve 63, and the hydraulic passage 52.

Thus, as the low clutch C_{L} is engaged, the axial force produced by the primary side hydraulic servo 32 in which the hydraulic pressure operates to both of the primary and secondary hydraulic chambers 45, 47 becomes higher than the axial force produced by the secondary side hydraulic servo 33 only from the primary hydraulic chamber 46 in the CVT 11. The CVT 11 enters in the axial force state corresponding to the torque transmission from the primary pulley 7 to the secondary pulley 9, where the ratio control valve 57 controls the pulley ratio. In this situation, where the CVT 11 has the pulley ratio indicating a predetermined overdrive (O / D) state, the engine torque from the input shaft 3 is transmitted to the carrier 19c of the planetary gear unit 19 through the low clutch C_{L} and the power transmission mechanism 26 and also transmitted to the sun gear 19s through the CVT 11 in which the torque is transmitted from the primary pulley 7 to the secondary pulley 9, and then, both torques are integrated at the planetary gear unit 19 and taken out them at the output shaft 5 as the reverse rotation through the ring gear 19r. It is to be noted that, as shown in Fig. 5, when the manual valve 59 is at the parking position P and the neutral position N, the low clutch C_{L} and the high clutch C_{H} both are disengaged, and predetermined hydraulic pressure is supplied to the primary hydraulic chambers 45, 46 of the primary and secondary side hydraulic servos 32, 33.

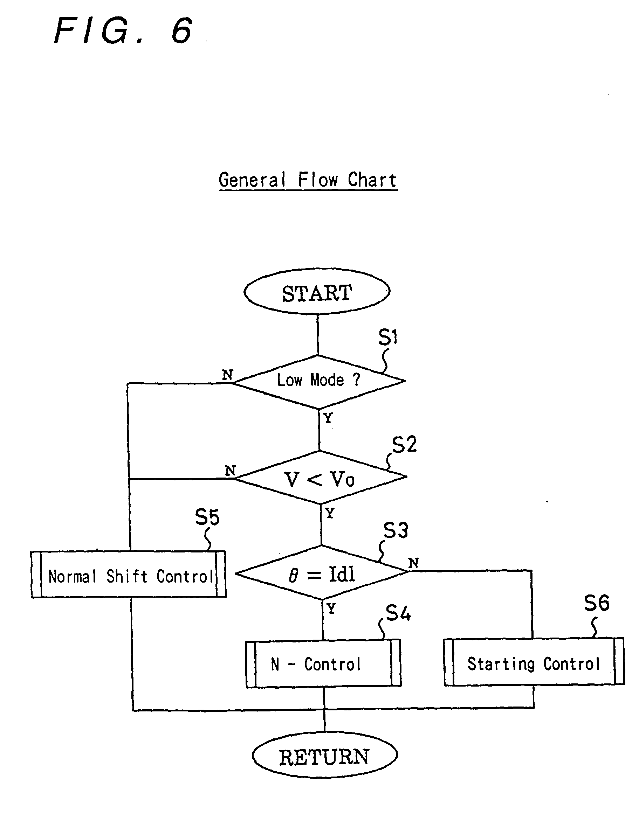

A neutral control by the control mechanism 54 is described as follows. First, as shown in a general flow of Fig. 6, at an electric control unit (ECU), judgments are made as to whether the continuously variable transmission is currently driving at the low mode (S1), as to whether the vehicle drives at a speed less than the preset vehicle speed V0 (S2), and as to whether the throttle opening θ is in the idling state (S3). When the judgments are all YES at steps S1, S2, and S3, or when the continuously variable transmission is currently at the low mode; the vehicle is slower than the preset speed; and the throttle opening is in the idling state, then the neutral control is executed (S4). When any judgment is NO at steps S1, S2, or when it is not at the low mode or the vehicle drives with a higher speed than the preset speed, then the normal variable speed control is executed (S5) to control the continuously variable transmission for variable speed along the best fuel consumption curve or maximum power curve. When the judgment is NO at step S3, or when the throttle opening is not in the idling state, the start driving control is executed to start driving (S6).

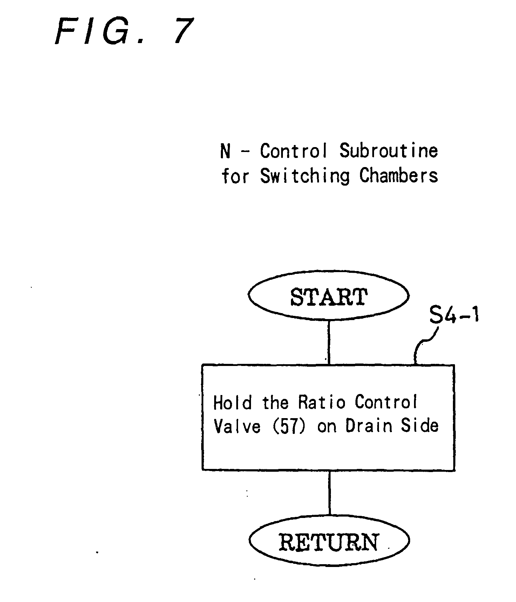

As shown in a neutral control subroutine of Fig. 7, the neutral control is executed (S4-1) by switching and holding the ratio control valve 57 on a drain side. That is, although the manual valve 59 is at the D-position described above and the low and high control valve 60 is at the low mode position described above, the ratio control valve 57 is switched and held to communicate the port i with a drain port EX. In this situation, the adjusted pressure from the output port c of the regulator valve 56 is supplied to the primary hydraulic chambers 45, 46 of the primary and secondary side hydraulic servos 32, 33 through the hydraulic passages 61, 50, 51 and supplied to the hydraulic servo C_{L} for the low clutch through the ports d, e of the manual valve 59 and the ports j, k of the low and high control valve 60. The hydraulic pressure of the secondary hydraulic chamber 49 of the secondary side hydraulic servo 33, which had operated at the low mode described above, is drained through the ports m, l of the low and high control valve 60, the ports g, f of the manual valve 59, the port i of the ratio control valve 57, and the drain port EX.

Accordingly, since the same hydraulic pressure is supplied to the primary chambers 45, 46 which have the same effective pressure receiving areas in the primary and secondary side hydraulic servos 32, 33 in the CVT 11, the identical axial force is exerted to the primary pulley 7 and the secondary pulley 9, and thereby the low mode is maintained in which the low clutch CL is engaged.

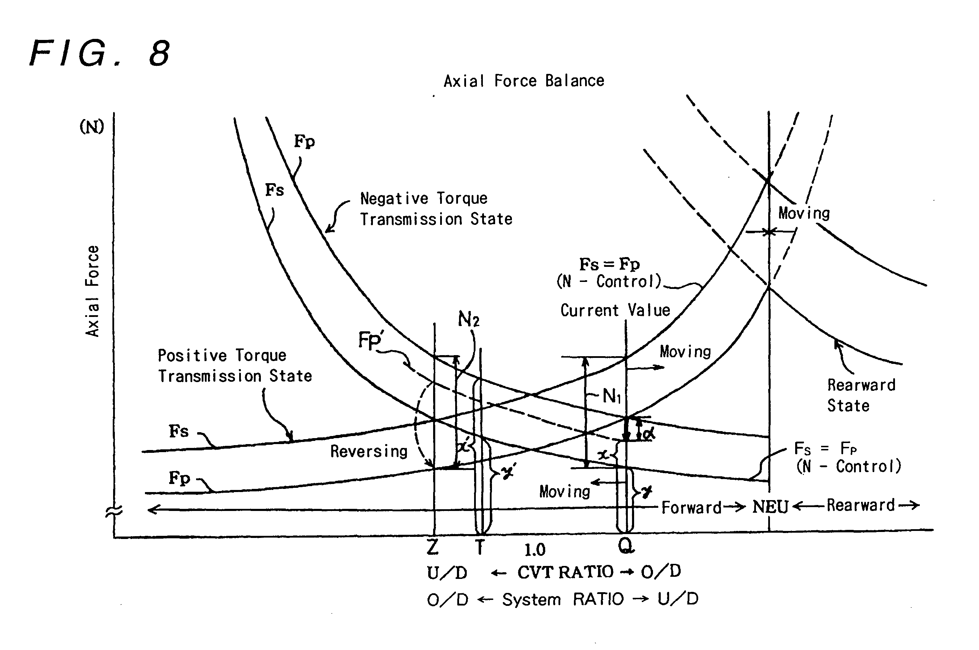

Referring to Fig. 8, the neutral control in which the CVT 11 self-converges to a predetermined pulley ratio with the zero output of the output shaft 5 by application of equalized axial forces to the primary pulley 7 and the secondary pulley 9, is described.

During the forward drive in the low mode (a state that the power in the forward direction is transmitted from the engine to the drive wheels), the secondary pulley 9 serves as the driving side while the primary pulley 7 serves as the driven side in association with the torque circulation, as described above, and thereby the axial force Fs of the secondary pulley becomes larger than the axial force Fp of the primary pulley (Fs > Fp), balancing them at a certain value determined by the input torque and the pulley ratio. When the throttle opening θ enters the idling state to then render the vehicle in the coast running state, the neutral control begins. This situation is a negative torque transmission state that the engine torque is transmitted from the drive wheels. As described above, the axial force Fs of the secondary pulley 9 is set to be equal to the axial force Fp of the primary pulley 7 (Fs = Fp). To keep the condition (Fp > Fs) to maintain the low mode coast running state (the negative torque transmission state), the axial force Fs of the secondary pulley comes to be excessive against the axial force Fp of the primary pulley. The effective diameter of the secondary pulley 9 is therefore increased whereas the effective diameter of the primary pulley 7 is reduced to render the CVT 11 move toward the underdrive (U / D) direction; consequently, the output speed of the entire transmission system 1 from the output shaft 5 shifts to the overdrive (O / D) direction.

The engine speed is reduced according to change of the speed toward the overdrive direction in the transmission system, as well as due to the lowered speed of the vehicle, with respect to the respective gear ratios. When the engine speed becomes lower than the idling speed, the negative torque state in which the engine speed is so far reduced due to restriction by the speed of the drive wheels now turns into the positive torque transmission state in which the torque is transmitted from the engine to the drive wheels, so that the vehicle is moved from the coast state to the drive state.

During the low mode forward drive state, although the secondary side axial force Fs is balanced to keep a state (Fs > Fp) with a certain difference larger than the primary side axial force Fp, the axial force Fp of the primary pulley now comes to be excessive regarding the equal axial forces (Fs = Fp) set under the neutral control. The effective diameter of the primary pulley 7 is increased and thereby causes the CVT 11 to move toward the overdrive direction, so that the output of the entire transmission system 1 from the output shaft 5 is moved toward the underdrive (U / D) direction.

The engine speed is then increased with respect to the wheel speed (vehicle driving speed), and the engine enters in the negative torque state, thereby rendering the vehicle in the low mode coast running state. To maintain the running state (Fp > Fs) again, the CVT 11 is moved to the underdrive direction, and thereby the entire transmission system 1 is moved toward the overdrive direction. This operation is repeated corresponding to the respective output speeds (vehicle speeds) of the entire transmission system 1 to be underdriven, and the vehicle reaches the stop in maintaining a state that the output torque of the entire transmission system is zero (the same state as the off state of a manual clutch) while the engine speed is held at the idling speed, or while the engine output is a zero state. It is to be noted that during the neutral control, similarly when the vehicle speed is quickly reduced by stepping a foot brake, the CVT 11 automatically self) converges so as to nullify the output of the entire transmission system from the output shaft 5 with respect to the respective vehicle speeds.

As described above, after the CVT selfconverges and the vehicle enters a stop state, the vehicle stop state is stably maintained. That is, for example, if the CVT 11 shifts toward the underdrive (U/D) direction, or the forward direction of the transmission system 1, the engine speed is reduced to render the engine in the positive torque drive state according to the entire transmission's movement toward the overdrive. As described above, similarly, the CVT 11 and the transmission system 1 then change its speed toward the overdrive and underdrive directions, respectively, and the transmission is returned to the neutral position (NEU) that the speed of output shaft 5 is zero. To the contrary, when the CVT is shifted toward the overdrive direction and thereby the transmission system is shifted toward the rearward direction, the primary pulley 7 comes to serve as the driving side while the secondary pulley 9 comes to serve as the driven side in the CVT 11 as described above. Since the torque transmission direction becomes in turn opposite to the direction during the low mode forward drive state, the axial force Fp of the primary pulley is balanced to keep a state with a certain difference larger than the axial force Fs of the secondary pulley. In this state (Fp > Fs), similarly as described above, the axial force Fs on the secondary side comes to be excessive with respect to the state of equal axial forces (Fp = Fs), the CVT 11 is shifted toward the underdrive direction and thereby the transmission system 1 moves toward the overdrive direction, so that the transmission is returned to the neutral position that the speed of output shaft 5 is zero. Accordingly, the transmission system 1 is automatically returned to and stably held at the neutral position even if the CVT 11 is, for example, shifted to the overdrive side or the underdrive side.

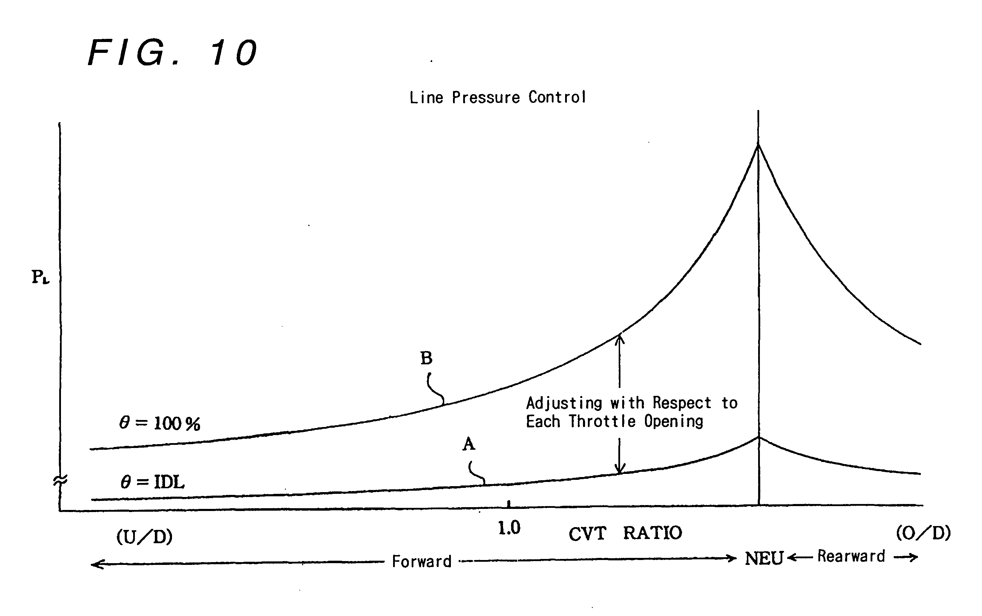

It is to be noted that Fig. 10 is a diagram showing control of a line pressure P_{L} based on the regulator valve 56, which is determined by the throttle opening θ and the torque ratio of the CVT 11. That is, the line pressure P_{L} is adjusted with respect to each throttle opening between a line pressure curve A in which the throttle opening is at the idling state and a line pressure curve B in which the throttle opening is at 100% state, and the line pressure P_{L} is corresponding to the transmission torque capacity. With the neutral control described above, since the engine speed becomes an idling rotation and the engine output becomes zero, the neutral control can be implemented by hydraulic pressure of a relatively small amount without generating line pressure P_{L} corresponding to the transmission torque capacity described above.

Although in the description above the case when the axial force of the primary pulley 7 and the axial force of the secondary pulley 9 are equalized in the neutral control is described, a neutral control substantially the same as described above can be conducted by setting a smaller value than a certain difference between axial forces of both pulleys determined by the input torque and the pulley ratio of the CVT 11 during the positive or negative torque transmission, even if both axial forces Fp, Fs are not equal.

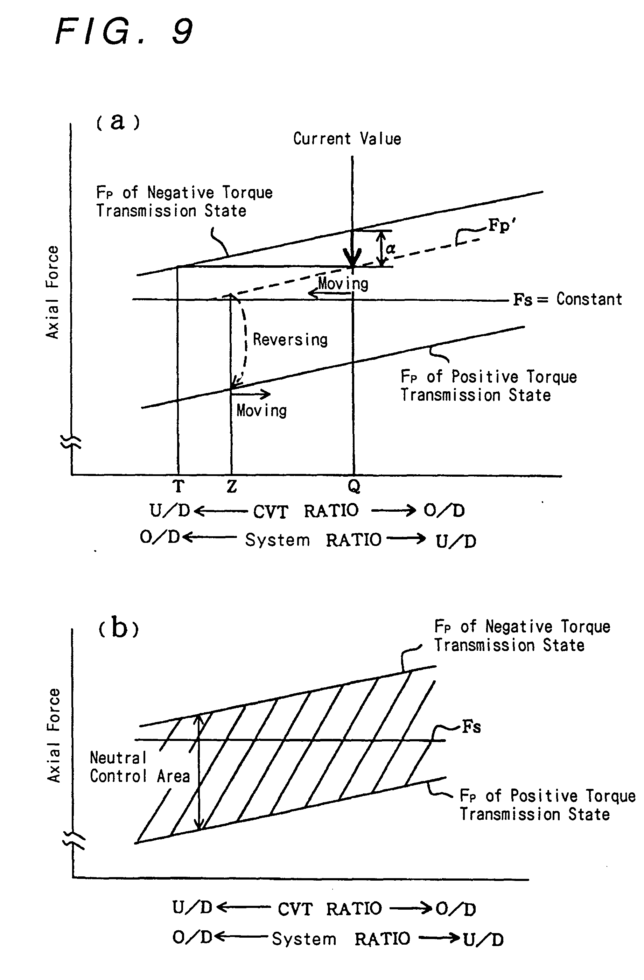

That is, as shown in Fig. 9(a), on an assumption that the axial force Fs of the secondary pulley 9 is constant for easier understanding, it is in a relation that the axial force Fp of the primary pulley 7 is larger than the axial force Fs of the secondary pulley 9 (Fp > Fs) and the pulley ratio is currently at the current value Q, because at the time that the neutral control starts it is at the coast running state (the negative torque transmission state) as described above. If the primary side axial force Fp is set to a smaller value (Fp' = Fp.α) by a part α, it becomes a state that the axial force Fp of the primary pulley 7 is reduced by the part α, so that the primary pulley 7 is widened (or the effective diameter is made smaller), that the CVT 11 moves toward the underdrive (U / D) side, and that the transmission system 1 is changed to the overdrive (O / D) side.

Although if this state (Fp' = Fp ·α) is maintained the CVT is balanced with speed-change value T and stably held at the position (the target pulley ratio) in a manner as well as the normal speed-changing control, the CVT is further moved toward the underdrive (U/D) direction if the primary side axial force Fp' is at any time changed according to change of the pulley ratio as shown by a broken line.

If the engine speed is lowered according to the movements toward the underdrive direction of the CVT 11 and thereby toward the overdrive direction of the transmission system 1 or due to a lowered vehicle speed, and if the engine speed comes to be lower than the idling speed (Z position in Fig. 9(a)), the torque transmission direction is reversed, and then, the transmission system 1 enters a state that the torque is transmitted from the engine to the drive wheels (positive torque transmission state). Though the axial force balance would be reversed (Fs > Fs) according to the reverse of the transmission torque (negative torque -- > positive torque), the primary side axial force Fp in fact comes to be excessive since the primary side axial force is at Fp' at that time. Therefore, the primary pulley 7 is moved toward the direction that the pulley's width is made narrower (direction that the effective diameter is made larger), so that the CVT 11 changes its speed toward the overdrive (O / D) direction, and so that the transmission system 1 changes its speed toward the underdrive (U/D) direction.

When the engine speed is increased again to render the vehicle enter a state that the engine speed surpasses the vehicle speed at that time, or a state that the vehicle speed suppresses the engine speed, the engine is switched to be in the negative torque transmission state (Fp > Fs), so that the CVT 11 changes its speed toward the underdrive direction as described above and thereby the transmission system 1 changes its speed toward the overdrive direction. Repeating this control renders the vehicle reduce its speed, and therefore, the vehicle reaches the stop state (neutral position) and is stably held at the stop state.

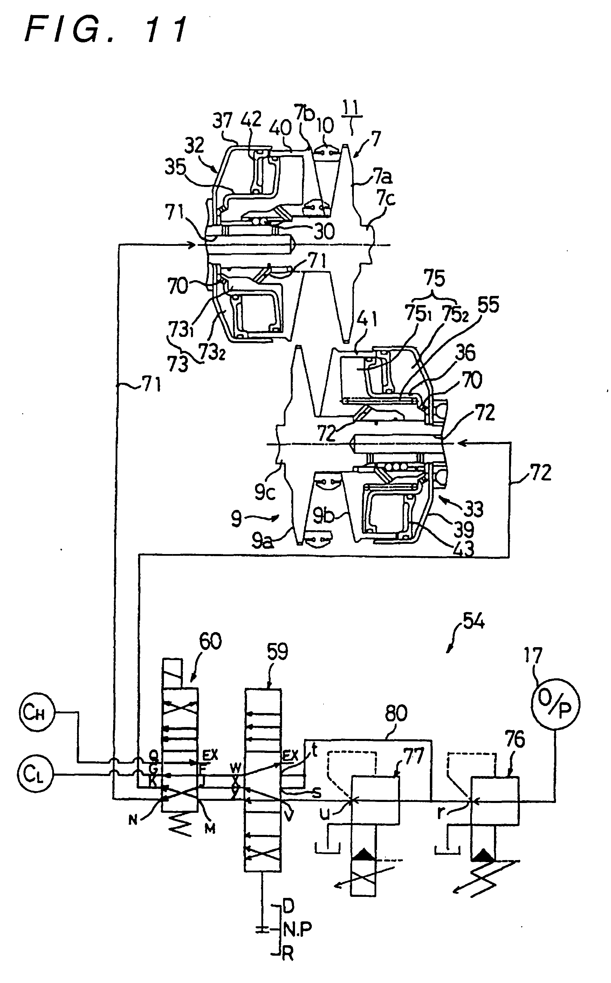

In the description above, the range of the variable amount α of the primary side axial force Fp can as shown in Fig. 9(b) be anywhere between the axial force Fp during the positive torque transmission and the axial force Fp during the negative torque transmission, which are determined by the input torque and pulley ratio of the CVT (hatching zone), and therefore, it can be a constant axial force Fp' close to the secondary side axial force Fs within the practical range, or according to the change of the pulley ratio, the axial force Fp' (also possibly Fs') can always be controlled to be a value in the hatching zone. That is, even when the axial forces of both pulleys 7, 9 are not precisely identical by existence of the spring 55 for pre-load therebetween in the embodiment in Fig. 4 (similarly in an embodiment in Fig. 11 described below), the neutral control that the CVT automatically self-converges to the non-drive state, and even when the axial force Fp or Fs is controlled to be a value within a relatively broad range (hatching zone) corresponding to the pulley ratio at that time, the neutral control is conducted.

Although the description above is based on the case when the secondary side axial force is constant for easier understanding, the neutral control can similarly be conducted even during a general condition that the axial force Fs is varied as shown in Fig. 8. Referring to Fig. 8, such a general condition is described as follows.

When the neutral control starts with the current valve Q while the CVT 11 is in a state that the pulley ratio is stable at point Q in Fig. 8, the vehicle is in a coast running state (the negative torque transmission state) where the throttle opening is the idling state as described above. If the primary side axial force Fp is set to be a smaller value Fp' (Fp' = Fp-α) by part α, it is in a state that the primary side axial force Fp' is in shortage (Fp' < Fp) in a similar manner as described above, so that the CVT moves toward the underdrive (U / D) direction and thereby the transmission system 1 changes its speed toward the overdrive direction.

If this state is maintained, the CVT would be balanced at a pulley ratio T (Fp / Fs = x' / y' = x / y) at which the axial force ratios (Fp' / Fs = x / y) are identical, and the CVT is stably held at the pulley ratio. However, if the primary side axial force Fp' is changed at any time corresponding to the pulley ratio as shown by the broken line, the CVT further moves toward the underdrive (U / D) direction.

The engine speed is lowered according to the movements toward the underdrive direction of the CVT and thereby toward the overdrive (O/D) direction of the transmission system 1 or due to a lowered vehicle speed. If the engine speed becomes lower than the idling speed (Z position), the torque transmission direction is reversed as described above, and then, it enters a state that the torque is transmitted from the engine to the drive wheels (positive torque transmission state). Then, though the axial force balance would be reversed (Fs > Fs) according to the reverse of the transmission torque, the primary side axial force Fp' in fact comes to be excessive since the primary side axial force is at Fp'. Therefore, the primary pulley 7 is moved toward the direction that its effective diameter is made larger, so that the CVT changes its speed toward the overdrive direction, and so that the transmission system 1 changes its speed toward the underdrive direction.

When the engine speed is increased again to render the engine enter the negative torque transmission state, the primary side axial force Fp' is in the state of Fp' < Fp as described above, so that the CVT changes its speed toward the underdrive direction, and so that the transmission system 1 changes its speed toward the overdrive direction. Repeating this control renders the vehicle reduce its speed, and therefore, the vehicle reaches the stop state (neutral position) and stably held at the stop state.

The variable amount α of the primary side axial force Fp' described above can be, for example, at a time of pulley ratio Q, any amount within a range N1 of the primary side axial forces Fp-Fp during the positive torque transmission state and during the negative torque transmission state, which are determined by the input torque and pulley ratio of the CVT and, at a time of, for example, pulley ratio Z, any amount within a range N2 of the primary side axial forces during the positive and negative torque transmission states, which are determined by the input torque and pulley ratio of the CVT. Although those ranges may vary in accordance with the pulley ratio changing from time to time, the ranges always keep width of a certain degree, so that frequent controls are not needed.

It is to be noted that a balance diagram of axial forces shown in Fig. 8 indicates the positive torque transmission state and the negative torque transmission state in an superimposed manner. Therefore, when the torque transmission direction is reversed, not the axial forces Fp, Fs substantially move apart in up and down direction as shown in the diagram, but the secondary side axial force Fs only is changed if the primary side axial force Fp is constant as shown eventually by the time of the pulley ratio value Q, or the primary side axial force Fp only is changed if the secondary side axial force Fs is constant as shown by the time of the pulley ratio value Z. Furthermore, although the points Q and P are selected to be easily illustrated since the description above is done with reference to Fig. 8, such control is conducted in fact at any pulley ratio value, so that there is no large movement from Q point to Z point in the neutral control, so that small movements are continuously repeated to render the vehicle stop.

That is, the neutral control (the non-drive state) is conducted with a smaller value within a range not reversing a relation in size, or a difference, between the axial forces Fp, Fs of the primary and secondary pulleys than the difference between the axial forces on the primary and secondary pulleys determined by the input torque and the pulley ratio of the belt type continuously variable transmission at that time when the output torque direction of the transmission system 1 is positive, or conducted with a range not reversing the relation in size than the difference between the axial forces on the primary and secondary pulleys determined by the input torque and the pulley ratio of the belt type continuously variable transmission at that time when the output torque direction is negative. Thus, as in the embodiment described above, although equalizing both axial forces Fp, Fs is a desirable embodiment since it makes the control easier, the neutral control self-converging at the neutral position is implemented without being disturbed even if both axial forces are not precisely identical or even if both axial forces are slightly different from each other by the spring for pre-load or the like, so that the neutral control would be implemented by a method controlled corresponding to the pulley ratio in a relatively broad range of an axial force difference.

Now referring to Fig. 11, another embodiment of a control mechanism is described. Although the primary and secondary side hydraulic servos 32, 33 of the embodiment, as well as one shown in Fig. 4, includes first and secondary hydraulic chambers 73₁, 75₁, 73₂, 75₂, holes 70, 70 are formed in the diaphragms 35, 36; simply in an aim at increment of pressure receiving areas, a hydraulic actuator composed of hydraulic chambers 73, 75 substantially serves as a piece to which hydraulic pressure is supplied from hydraulic passages 71, 72 is constituted; the hydraulic chambers 73, 75 of both hydraulic servos 32, 33 have the same pressure receiving areas. The spring 55 for pre-load is formed in a contracted manner in the primary hydraulic chamber 75 of the secondary side hydraulic servo 33. The control mechanism 54 includes a primary regulator valve 76 and a secondary regulator valve 77 in sequential continuation of the oil pump 17 and also includes the manual valve 59 and the low and high control valve 60.

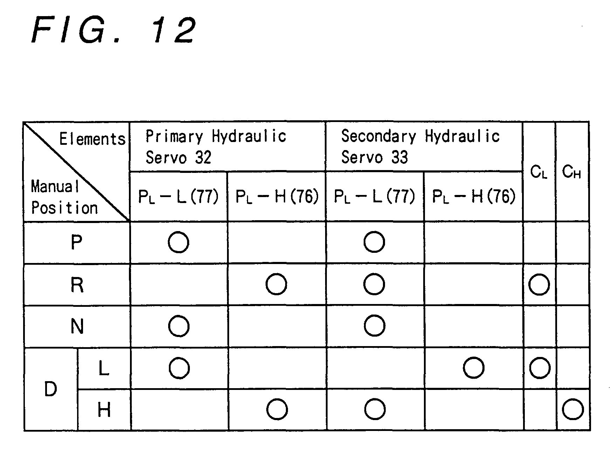

The control mechanism 54 is thus constituted and operates as shown in an operation table in Fig. 12. That is, at the low mode (L) of the D range, a relatively high line pressure (P_{L} - H) adjusted by the primary regulator valve 76 is in communication with ports s, t of the manual valve 59 through a hydraulic passage 80 of the output port r. The secondary regulator valve 77 generating a relative low line pressure (P_{L} - L) by adjusting the output adjusted pressure from the primary regulator valve 76 communicates a port v of the manual valve 59 with an output port u thereof.

At the D range, the manual valve 59 takes a position communicating the port t with a port w, the port s with a port y, and the port v with a port x, and at the low mode, the low and high control valve 60 takes a position communicating a port F with a port G, a port J with a port N, and a port M with a port K, respectively. Therefore, the relatively high line pressure (P_{L} - H) of the primary regulator valve 76 is supplied to the hydraulic servo C_{L} for the low clutch through the ports t, w of the manual valve 59 and the ports F, G of the low and high control valve 60 and operates to the hydraulic chamber 75 of the secondary side hydraulic servo 33 through ports s, y of the manual valve, ports M, K of the low and high control valve 60, and the hydraulic passage 72. On the other hand, the relatively low line pressure (P_{L} - L) of the secondary regulator valve 77 is supplied to the hydraulic chamber 73 of the primary side hydraulic servo 32 through ports v, x of the manual valve, ports J, N of the low and high control valve 60, and the hydraulic passage 71. Accordingly, the low clutch C_{L} is engaged, the relatively high axial force is exerted to the secondary pulley 9 while the relatively low axial force is exerted to the primary pulley 7, so that the CVT 11 enters the low mode drive state in which the torque is transmitted from the secondary pulley 9 to the primary pulley 7.

During the high mode (H) of the D range, although the manual valve 59 takes the same position, the low and high control valve 60 is switched to communicate the port F with the port Q, the port J with the port K, and the port M with the port N. In this situation, the relatively high line pressure (P_{L} - H) from the primary regulator valve 76 is supplied to the hydraulic servo C_{H} for the high clutch through the ports t, w of the manual valve 59 and the ports F, Q of the low and high control valve 60 and supplied to the hydraulic chamber 73 of the primary side hydraulic servo 32 through ports s, y of the manual valve, ports M, N of the low and high control valve 60, and the hydraulic passage 71. On the other hand, the relatively low line pressure (P_{L} - L) from the secondary regulator valve 77 is supplied to the hydraulic chamber 75 of the secondary side hydraulic servo 33 through the ports v, x of the manual valve 59, the ports J, K of the low and high control valve 60, and the hydraulic passage 72. Accordingly, the high clutch C_{H} is engaged, the relatively high axial force is exerted to the primary pulley 7 while the relatively low axial force is exerted to the secondary pulley 9, so that the CVT 11 enters the high mode drive state in which the torque is transmitted from the primary pulley 7 to the secondary pulley 9.

If the manual valve 59 is manipulated to the reverse range (R), the valve 59 is switched to communicate the port t with the port w, the port s with the port x, and the port v with the port y, and at the same time, the low and high control valve 60 is switched for the low mode state. In this situation, the relatively high line pressure (P_{L} - H) from the primary regulator valve 76 is supplied to the hydraulic servo C_{L} for the low clutch through the ports t, w of the manual valve 59 and the ports F, G of the low and high control valve 60 and supplied to the hydraulic chamber 73 of the primary side hydraulic servo 32 through the ports s, x of the manual valve, the ports J, N of the low and high control valve 60, and the hydraulic passage 71. On the other hand, the relatively low line pressure (P_{L} - L) from the secondary regulator valve 77 is supplied to the hydraulic chamber 75 of the secondary side hydraulic servo 33 through the ports v, y of the manual valve 59, the ports M, K of the low and high control valve 60, and the hydraulic passage 72. Accordingly, the low clutch C_{L} is engaged, the relatively high axial force is exerted to the primary pulley 7 while the relatively low axial force is exerted to the secondary pulley 9, so that the CVT 11 enters the rearward state in which the torque is transmitted from the primary side to the secondary side. It is to be noted that, as shown in Fig. 12, when the manual valve is manipulated to take the parking position (P) and the neutral position (N), the relatively low line pressure (P_{L} - L) operates to the primary and secondary side hydraulic servos 32, 33.

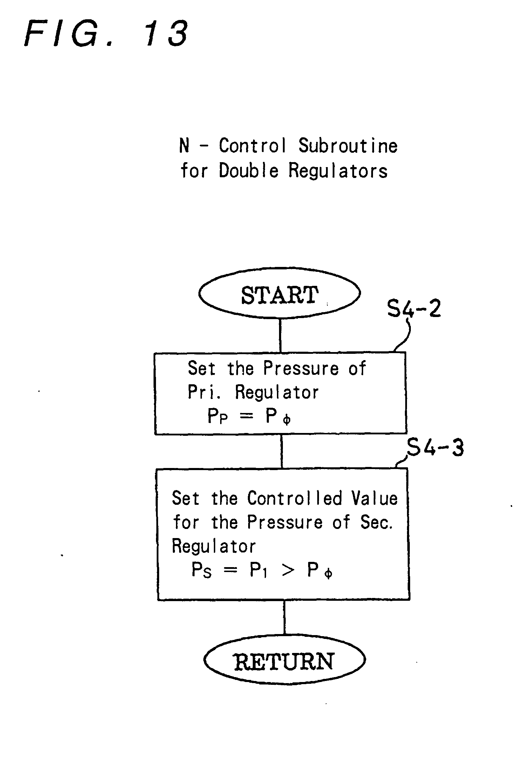

In operation, the neutral control is executed, as shown at step S4 in Fig. 6, when it is at the preset speed or below (V < V0) and when the throttle opening becomes the idling state (θ= Idle). In this embodiment, as shown in Fig. 13, the adjusted pressure output Pp of the primary regulator valve 76 is set at the lowest pressure P φ (S4-2) and the adjusted pressure output Ps of the secondary regulator valve 77 is set at an adjusted pressure P1 higher than the lowest pressure P φ (S4-3). Since the secondary regulator valve 77 has the original pressure from the output pressure of the primary regulator valve 76, the valve 77 does not substantially function, and therefore, the valve 77 outputs the output pressure Pp of the primary regulator valve made of the lowest pressure P φ as it is as a low pressure side output pressure Ps (Ps = Pp).

During the neutral control state, which is the same situation as the low mode (L) in which the manual valve 59 is in the D range and the low and high control valve 60 is at a low position, the output pressure (Pp = P α) of the primary regulator valve 76 is supplied to the hydraulic servo C_{L} for the low clutch through the ports t, w of the manual valve 59 and the ports F, G of the low and high control valve 60 and supplied to the hydraulic chamber 75 of the secondary side hydraulic servo 33 through the ports s, y of the manual valve 59, the ports M, K of the low and high control valve 60, and the hydraulic passage 72. On the other hand, the hydraulic pressure (Ps = Pp = P φ) from the output port u of the secondary regulator valve 77 is supplied to the hydraulic chamber 73 of the primary side hydraulic servo 32 through the ports v, x of the manual valve 59, the ports J, N of the low and high control valve 60, and the hydraulic passage 71.

Accordingly, during the low mode state (L) in which the low clutch C_{L} is engaged, equal axial forces are exerted to the primary pulley 7 and the secondary pulley 9, and as described above, the CVT 11 automatically self-converges so that the output of the transmission system 1 from the output shaft 5 becomes zero, corresponding to the respective vehicle speeds to be reduced and is stably held at the neutral position in which the output speed becomes zero.

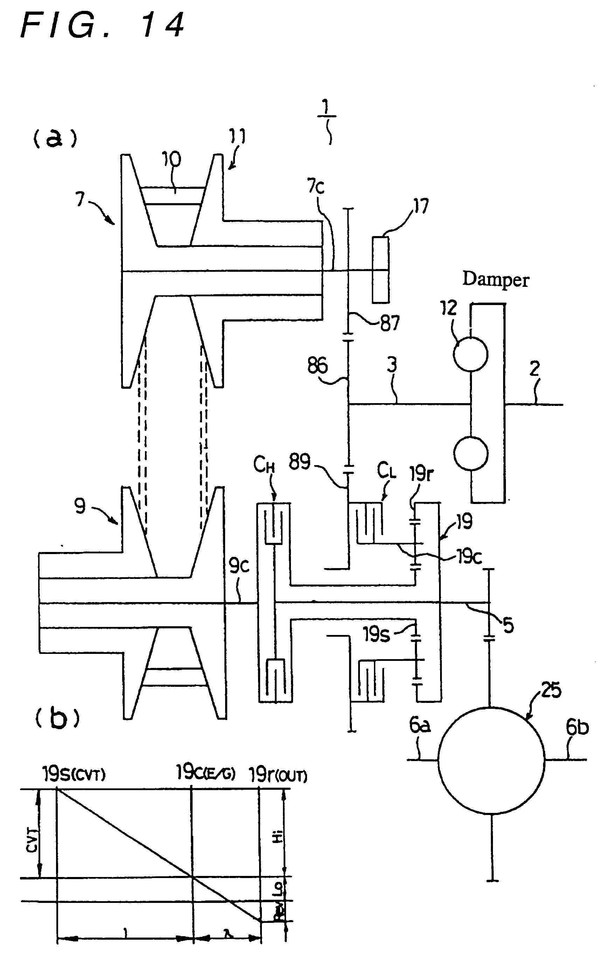

Referring to Figs. 14 to 20, other embodiments of the power transmission mechanism in the continuously variable transmission are described. Fig. 14 is a modification in which the primary shaft 7c is located at a position different from the first shaft (input shaft 3) aligned with the engine crankshaft 2 and in which the low clutch C_{L} is also disposed on the second shaft 5 in addition to the high clutch C_{H}. Accordingly, the rotation of the engine crankshaft 2 is transmitted to the input shaft 3 through the damper 12, transmitted to the primary pulley 7 through gears 86, 87, and transmitted to the carrier 19c of the planetary gear unit 19 of the low clutch C_{L} through gears 86, 89. In the single pinion planetary gear unit 19, the first rotary element coupled to the input shaft 3 is the carrier 19c; the second rotary element coupled to the secondary pulley 9 is the sun gear 19s; the third rotary element coupled to the output shaft 5 is the ring gear 19r; the carrier 19c and the sun gear 19s rotate in the same direction. It is to be noted that the oil pump 17 is arranged on the primary shaft 7c on the engine side.

The power transmission mechanism of the embodiment operates in substantially the same way as the embodiment described with reference to Fig. 1 as shown in a speed diagram of Fig. 14(b). That is, at the low mode (Lo) in which the low clutch C_{L} is engaged, the engine torque is transmitted to the carrier 19c of the planetary gear unit 19 through the low clutch C_{L}, transmitted to the sun gear 19s through the CVT 11, and taken out at the output shaft 5 through the ring gear 19r; at that time, the torque circulation is generated, and the rotation of the output shaft 5 is switched in the normal and reverse directions with the neutral position therebetween. At the high mode, the engine torque is transmitted to the output shaft 5 through the CVT 11 and the high clutch C_{H}.

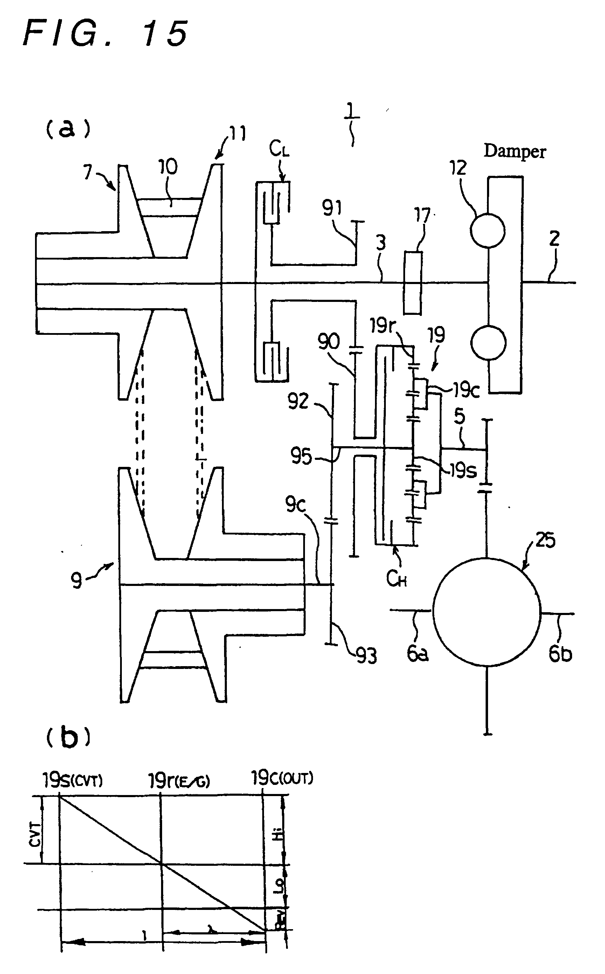

Fig. 15 shows an embodiment using a dual pinion planetary gear unit 19, in which: the ring gear 19r of the planetary gear unit 19 (first rotary element) is coupled to the input shaft 3 through gears 90, 91 and the low clutch C_{L}; the sun gear 19s (the second rotary element) is coupled to the secondary pulley 9 through gears 92, 93; the carrier 19c (the third rotary element) is coupled to the output shaft 5; the ring gear 19r and the sun gear 19s are connectable with each other through the high clutch C_{H}; the ring gear 19r and the sun gear 19s rotate in the same direction. It is to be noted that the third rotary element can be the sun gear instead of the carrier and that the first and second rotary elements can be constituted of a carrier not serving as the third rotary element, the sun gear, and the ring gear.

In this embodiment, as shown a speed diagram in Fig. 15(b), at the low mode (Lo), the engine torque from the input shaft 3 is transmitted to the ring gear 19r of the planetary gear unit 19 through the low clutch C_{L} and the gears 91, 90 and is transmitted to the sun gear 19s through the CVT 11 and the gears 93, 92. A torque circulation is generated in the same way as in the embodiment above at that time, and in the CVT 11, the secondary pulley 9 becomes the driving side while the primary pulley 7 becomes the driven side to output the torque from the carrier 19c to the output shaft 5 in the overdrive/underdrive direction opposite to the overdrive/underdrive direction of the CVT. Furthermore, if the CVT 11 enters the predetermined overdrive (O / D) state, the carrier 19c rotates reversely, or does a reverse (Rev) rotation, and reverses the torque transmission direction of the CVT 11. During the high (Hi) mode, the engine torque from the input shaft 5 is transmitted to a shaft 95 through the CVT 11, and the gears 93, 92, and the CVT changed speed torque of the shaft 95 is transmitted as it is to the output shaft 5 because at the high mode the planetary gear unit 19 is in a unitary rotation state by engagement of the high clutch C_{H}.

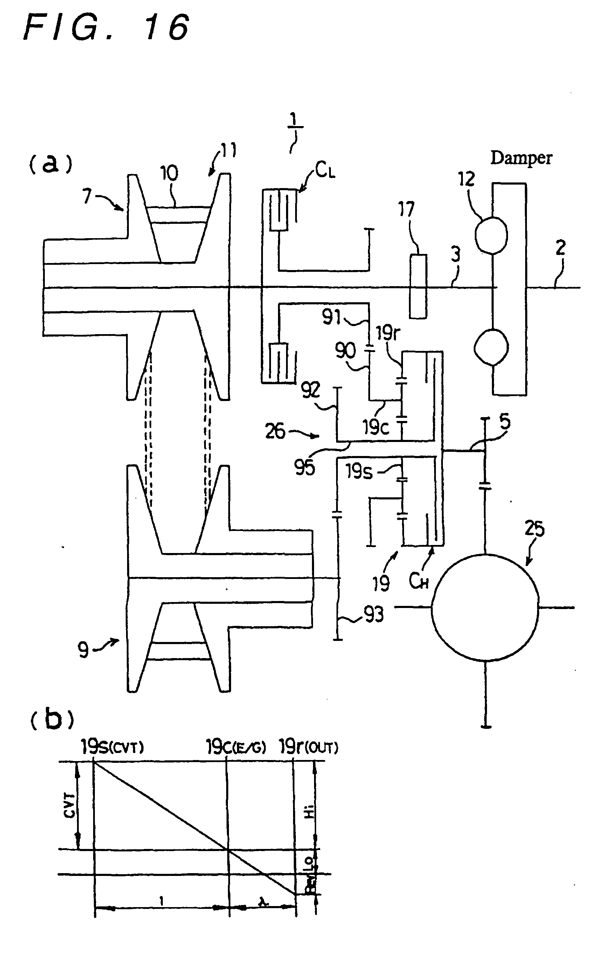

Fig. 16 is another modification in which the power transmission mechanism 26 is modified with gearing with respect to the embodiment shown in Fig. 1. That is, in the planetary gear unit 19, the carrier 19c of the planetary gear unit 19 (first rotary element) is coupled to the input shaft 3 through the gears 90, 91 and the low clutch C_{L}; the sun gear 19s thereof (the second rotary element) is coupled to the secondary pulley 9 through the gears 92, 93; the ring gear 19r thereof (the third rotary element) is coupled to the output shaft 5; the carrier 19c and the sun gear 19s rotate in the same direction. The high clutch C_{H} is placed between a secondary pulley co-operation shaft 95 and the output shaft 5 of the transmission (system) 1.

In this embodiment, as shown a speed diagram in Fig. 16(b), at the low mode, the engine torque from the input shaft 3 is transmitted to the carrier 19c of the planetary gear unit 19 through the low clutch C_{L} and the gears 91, 90 and transmitted to the sun gear 19s through the CVT 11 and the gears 93, 92, and the rotations of both gears are integrated and outputted from the ring gear 19r to the output shaft 5. A torque circulation is generated in the same way as in the embodiment above at that time; the output shaft 5 becomes the zero rotation at the predetermined overdrive position of the CVT 11; additional overdrive operation allows the reverse rotation to be taken out. During the high mode, the torque from the input shaft 3 is varied with speed as desired through the CVT 11 and taken out at the output shaft 5 through the gears 93, 92 and the high clutch C_{H}.

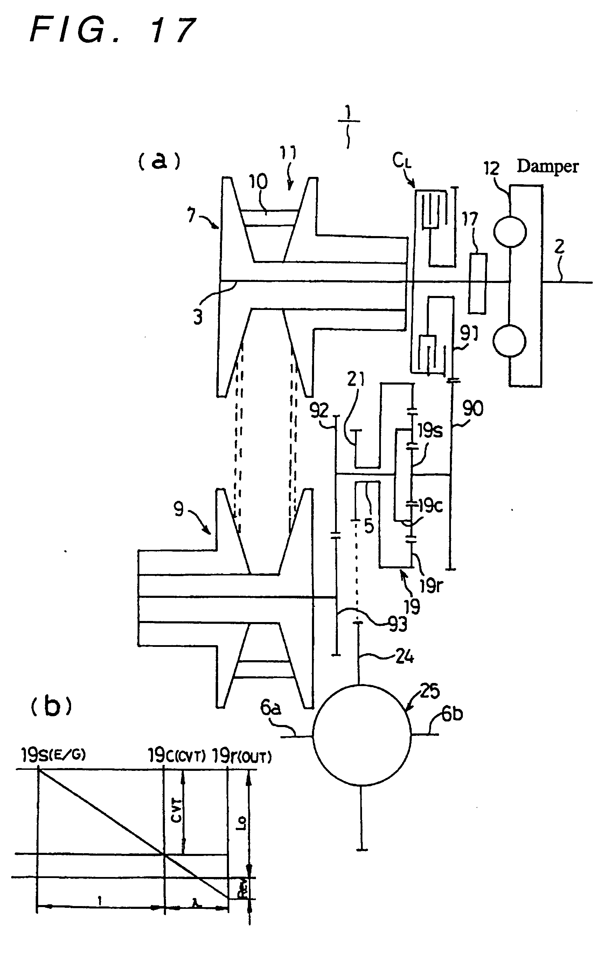

Fig. 17 is one modified further from the embodiment in Fig. 16; the sun gear 19s of a single pinion planetary gear unit 19 (first rotary element) is coupled to the input shaft 3 through the gears 90, 91 and the low clutch C_{L}; the carrier 19c (the second rotary element) is coupled to the secondary pulley 9 through the gears 92, 93; the ring gear 19r (the third rotary element) is coupled to the differential device 25 through the output shaft 5 and the gears 21, 24; the sun gear 19 and the carrier 19c rotate in the same direction. No high mode is used nor high clutch is placed, because the variable speed width of the CVT 11 is amplified at the planetary gear unit 19.

In this embodiment, as shown a speed diagram in Fig. 17(b), the engine torque from the input shaft 3 is transmitted to the sun gear 19s of the planetary gear unit 19 through the low clutch C_{L} and the gears 91, 90, subject to the CVT 11 to change speed thereof which is transmitted to the carrier 19c through the gears 93, 92, and taken out at the output shaft 5 after the speed changed rotation from the carrier 19c is amplified. A torque circulation is generated in the same way as in the embodiment above at that time, and the torque transmission direction of the CVT 11 is changed while the output shaft 5 takes a relatively wide forward zone, the neutral position in which rotational speed is zero, and the rearward zone.

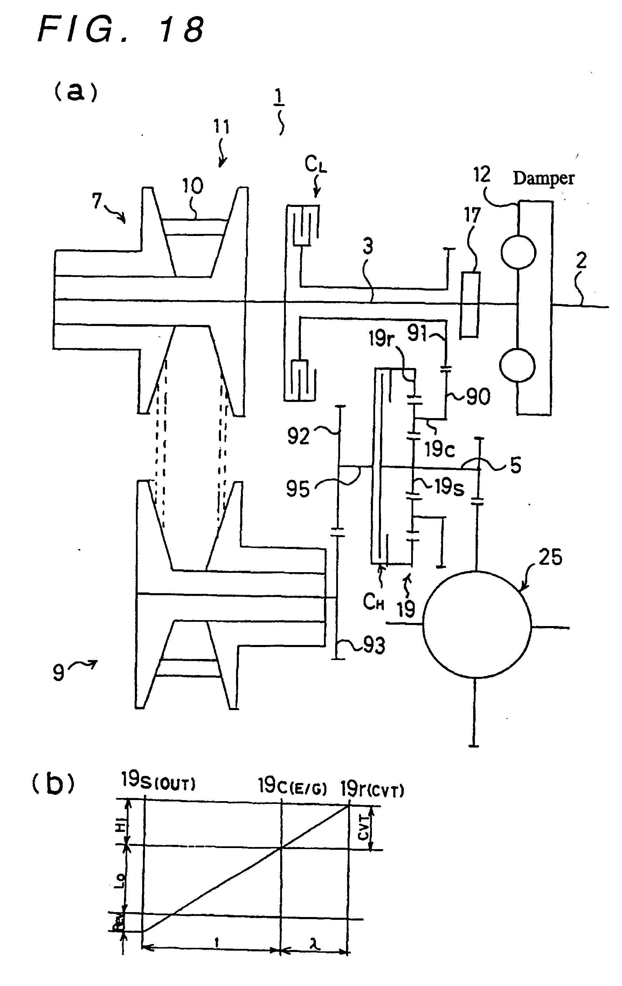

Fig. 18 is a transmission modified based on the embodiment in Fig. 16 changing connection of two rotary elements (19s, 19r) except the counter supporting element (19c) of the planetary gear unit 19. That is, the carrier 19c of a planetary gear unit 19 (first rotary element) is coupled to the input shaft 3 through the gears 90, 91 and the low clutch C_{L}; the ring gear 19r (the second rotary element) is coupled to the secondary pulley 9 through the gears 92, 93; the sun gear 19s (the third rotary element) is coupled to the output shaft 5; the carrier 19c and the ring gear 19r rotate in the same direction. The high clutch C_{H} is placed between the secondary pulley co-operation shaft 95 and the output shaft 5.

In this embodiment, as shown a speed diagram in Fig. 18(b), at the low mode, the engine torque from the input shaft 3 is transmitted to the carrier 19c of the planetary gear unit 19 through the low clutch C_{L} and the gears 91, 90, transmitted to the ring gear 19r through the CVT 11 and the gears 93, 92, and the rotations of both gears are integrated and outputted from the sun gear 19s to the output shaft 5. A torque circulation is generated in the same way as in the embodiment above at that time; the output shaft 5 is changed to rotate normally and reversely; the torque is amplified corresponding to speed change width of the CVT 11 and output from the output shaft 5. During the high mode, the rotation from the input shaft 3 is varied with speed through the CVT 11 and taken out at the output shaft 5 through the gears 93, 92 and the high clutch C_{H}.

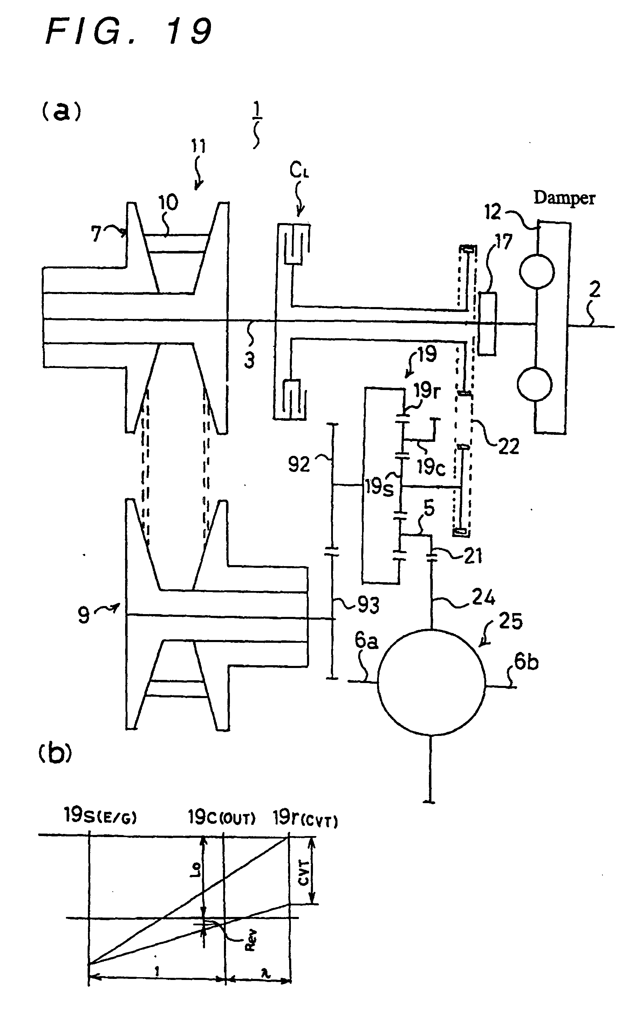

Fig. 19 is a transmission modified further based on the embodiment in Fig. 17; the sun gear 19s of a single pinion planetary gear unit 19 (first rotary element) is coupled to the input shaft 3 through a chain 22 and the low clutch C_{L}; the ring gear 19r (the second rotary element) is coupled to the secondary pulley 9 through the gears 92, 93; the carrier 19c (the third rotary element) is coupled to the differential device 25 through the output shaft 5 and the gears 21, 24; the sun gear 19 and the ring gear 19r rotate in the opposite direction. It is to be noted that the first rotary element can be a ring gear and the second rotary element can be a sun gear.

In this embodiment, as shown a speed diagram in Fig. 19(b), the engine rotation from the input shaft 3 is transmitted to the sun gear 19s of the planetary gear unit 19 through the low clutch C_{L} and the chain 22 and is transmitted to the ring gear 19r through the CVT 11 and the gears 93, 92, and the rotations of both gears are integrated and taken out at the output shaft 5 by way of the carrier 19c. A torque circulation is similarly generated at that time; the rotation is output from the output shaft 5 in being changed normally and reversely.

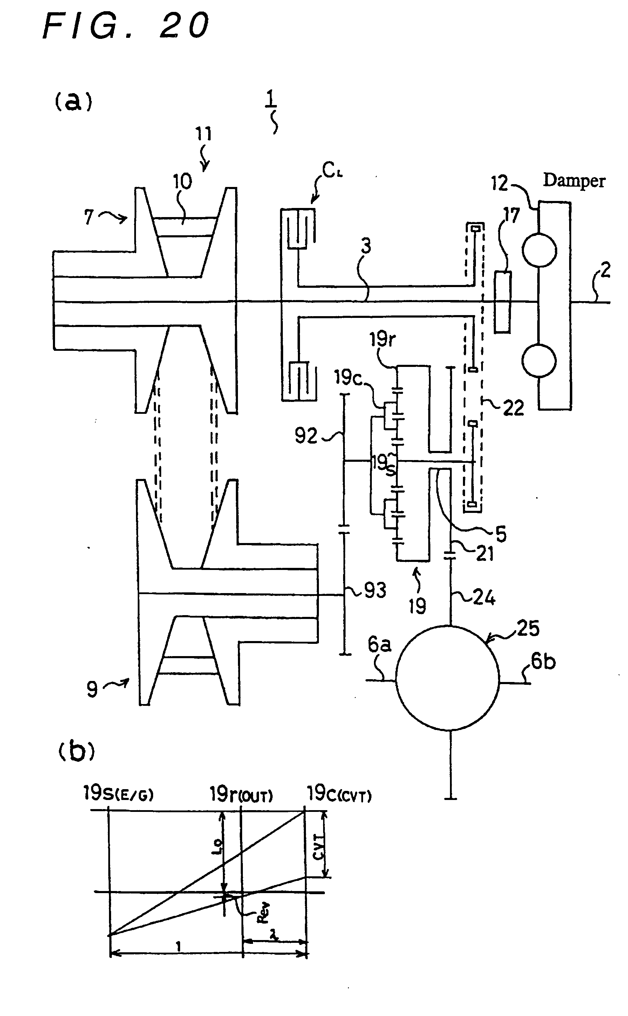

Fig. 20 is a transmission modified based on the embodiment in Fig. 19 using a dual pinion planetary gear unit. That is, the sun gear 19s of the dual pinion planetary gear unit 19 (first rotary element) is coupled to the input shaft 3 through the chain 22 and the low clutch C_{L}; the carrier 19c (the second rotary element) is coupled to the secondary pulley 9 through the gears 92, 93; the ring gear 19r (the third rotary element) is coupled to the differential device 25 through the output shaft 5 and the gears 21, 24; the sun gear 19 and the ring gear 19r rotate in the opposite direction. It is to be noted that the first rotary element can be a carrier and the second rotary element can be a sun gear.

In this embodiment, as shown a speed diagram in Fig. 20(b), the engine rotation from the input shaft 3 is transmitted to the sun gear 19s of the dual planetary gear unit 19 through the low clutch C_{L} and the chain 22, transmitted to the carrier 19c through the CVT 11 and the gears 93, 92, and the rotations of both gears are integrated and taken out at the output shaft 5 by way of the ring gear 19r . A torque circulation is similarly generated at that time; the rotation is output from the output shaft 5 in being changed normally and reversely.

## Claims

1. A continuously variable transmission (1) comprising:
an input shaft (3) operative in association with an engine output shaft (2);
an output shaft (5) operative in association with wheels;
a belt type continuously variable transmission (11) having: a primary pulley (7) operative in association with said input shaft (3); a secondary pulley (9); a belt (10) wound around both pulleys (7,9); and axial force operating means (32,33) for applying axial forces to both pulleys (7,9) to change the pulley ratio between said primary and secondary pulleys (7,9);
a planetary gear unit (19) having at least first, second, and third rotary elements (19s, 19c, 19r), wherein said first rotary element, said second rotary element; and said third rotary element operative in association with said input shaft (3), said secondary pulley (9), and said output shaft (5), respectively; so that the torque transmission direction is changed between both pulleys (7,9) as well as output torque direction of said output shaft (5) is changed based on the change of the pulley ratio in said belt type continuously variable transmission (11), **characterized by**
judging means for judging, based on a signal from detecting means for detecting vehicle driving state, as to whether it is in a state that the output torque of said output shaft (5) is required; and
controlling means (54) for switching, based on said judging means, said axial force operating means (32,33) so as, during a drive state requiring the output torque, to produce a difference to achieve a target pulley ratio by the axial forces exerted to the primary and secondary pulleys (7,9) and so as, during a non-drive state not requiring the output torque to equalize the axial forces exerted to the primary and secondary pulleys (7,9),
wherein:
said axial force operating means (32,33) includes a primary hydraulic servo (32) operative to the primary pulley (7) and a secondary hydraulic servo (33) operative to said secondary pulley (9);
each of said primary and secondary hydraulic servos (32,33) includes a plurality of hydraulic chambers (45,46,47,49); and
said controlling means (54) changes effective pressure receiving areas of said primary and secondary hydraulic servos (32,33) by selectively switching hydraulic passages (50-53) to said respective hydraulic chambers (45,46,47,49) to make the effective pressure receiving areas of both hydraulic servos (32,33) different during the drive state and equal during the non-drive state.

2. The continuously variable transmission (1) according to claim 1, wherein:
each of said primary and secondary hydraulic servos (32,33) includes at least a primary hydraulic chamber (45,46) and a secondary hydraulic chamber (47,49);
said primary hydraulic chambers (45,46) of both hydraulic servos (32,33) have the same effective pressure receiving area; said controlling means (54) includes a regulator valve (56) and a ratio control valve (57) for controlling hydraulic pressure supplied to said primary and secondary hydraulic chambers (45,46,47,49);
the hydraulic pressure from said regulator valve (56) is normally supplied to said primary hydraulic chambers (45,46) of both hydraulic servos (32,33); and
the hydraulic pressure from said ratio control valve (57) is supplied to either one of said secondary hydraulic chambers (47,49) of both hydraulic servos (32,33) during the drive state and is discharged from said secondary hydraulic chambers (47,49) of both hydraulic servos (32,33) during the non-drive state.

3. A continuously variable transmission (1) comprising:
an input shaft (3) operative in association with an engine output shaft (2);
an output shaft (5) operative in association with wheels;
a belt type continuously variable transmission (11) having: a primary pulley (7) operative in association with said input shaft (3); a secondary pulley (9); a belt (10) wound around both pulleys (7,9); and axial force operating means (32,33) for applying axial forces to both pulleys (7,9) to change the pulley ratio between said primary and secondary pulleys (7,9);
a planetary gear unit (19) having at least first, second, and third rotary elements (19s, 19c, 19r) wherein said first rotary element, said second rotary element, and said third rotary element operative in association with said input shaft (3), said secondary pulley (9), and said output shaft (5), respectively; so that the torque transmission direction is changed between both pulleys (7,9) as well as output torque direction of said output shaft (5) is changed based on the change of the pulley ratio in said belt type continuously variable transmission (11), **characterized by**
judging means for judging, based on a signal from detecting means for detecting vehicle driving state, as to whether it is in a state that the output torque of said output shaft (5) is required; and
controlling means (54) for switching, based on said judging means, said axial force operating means (32,33) so as, during a drive state requiring the output torque, to produce a difference to achieve a target pulley ratio by the axial forces exerted to the primary and secondary pulleys (7,9) and so as, during a non-drive state not requiring the output torque, to equalize the axial forces exerted to the primary and secondary pulleys (7,9),
wherein:
said axial force operating means (32,33) includes a primary hydraulic servo (32) operative to said primary pulley (7) and a secondary hydraulic servo (33) operative to said secondary pulley (9);
said primary and secondary hydraulic servos (32,33) include respective hydraulic chambers (73,75) having the same pressure receiving area;
said controlling means (54) includes primary and secondary regulator valves (76,77) for controlling hydraulic pressure supplied to said hydraulic chambers (73,75);
during the drive state, the hydraulic pressure is supplied to one of said hydraulic chambers (73,75) of both hydraulic servos (32,33) from said primary regulator valve (76) and to the other of hydraulic chambers (73,75) of both hydraulic servos (32,33) from said second regulator valve (77) ; and
during the non-drive state, the hydraulic pressure is supplied to said hydraulic chambers (73,75) of both hydraulic servos (32,33) from either one of said primary and secondary regulator valves (76,77).

4. The continuously variable transmission according (1) to claim 3, wherein said primary regulator valve (76) is in hydraulic communication with said secondary regulator valve (77) so that the output hydraulic pressure from said primary regulator valve (76) is delivered to the input of said secondary regulator valve (76), and during the non-drive state, the hydraulic value of the output hydraulic pressure of said secondary regulator valve (77) is set larger than the hydraulic pressure of the output hydraulic pressure of said primary regulator valve (76).

5. A continuously variable transmission (1) comprising:
an input shaft (3) operative in association with an engine output shaft (2) ;
an output shaft (5) operative in association with wheels;
a belt type continuously variable transmission (11) having: a primary pulley (7) operative in association with said input shaft (3); a secondary pulley (9); a belt (10) wound around both pulleys (7,9); and axial force operating means (32,33) for applying axial forces to both pulleys (7,9) to change the pulley ratio between said primary and secondary pulleys (7,9);
a planetary gear unit (19) having at least first, second, and third rotary elements (19s, 19c, 19r) wherein said first rotary element, said second rotary element, and said third rotary element operative in association with said input shaft (3), said secondary pulley (9), and said output shaft (5), respectively; so that the torque transmission direction is changed between both pulleys (7,9) as well as output torque direction of said output shaft (5) is changed based on the change of the pulley ratio in said belt type continuously variable transmission (11), **characterized by**
judging means for judging, based on a signal from detecting means for detecting vehicle driving state, as to whether it is in a state that the output torque of said output shaft (5) is required; and
controlling means (54) for switching, based on said judging means, the difference between the axial forces on said primary and secondary pulleys (7,9) produced by said axial force operating means (32,33) to, during a drive state requiring the output torque, a value to achieve a target pulley ratio with respect to the input torque of said belt type continuously variable transmission (11) at that time and, during a non-drive state not requiring the output torque, a smaller value within a range not reversing a relation between the amounts of the axial forces on said primary and secondary pulleys (7,9) than the difference between the axial forces on said primary and secondary pulleys (7,9) determined by the input torque and the pulley ratio of said belt type continuously variable transmission (11) at that time when the output torque direction of said output shaft (5) is positive or a smaller value within a range not reversing a relation between the amounts of the axial forces on said primary and secondary pulleys (7,9) than the difference between the axial forces on said primary and secondary pulleys (7,9) determined by the input torque and the pulley ratio of said belt type continuously variable transmission (11) at that time when the output torque direction of said output shaft (5) is negative.

6. The continuously variable transmission (1) according to any one of claims 1 to 5, wherein:
said detecting means includes a vehicle speed sensor for detecting vehicle speed and a throttle sensor for detecting throttle opening of the engine; and
said judging means determines that the output torque is not required, when the vehicle speed is at a predetermined amount or less and when the throttle opening is at a predetermined amount or less.

7. The transmission (1) according to any of claims 1 to 6, further comprising switching means for low speed mode and high speed mode,
wherein when said switching means selects said low speed mode, said first rotary element, said second rotary element, and said third rotary element in said planetary gear unit (19) are operative in association with said input shaft (3), said secondary pulley (9), and said output shaft (5), respectively and
wherein when said switching means selects said high speed mode, the operational association between said first rotary element in said planetary gear unit (19) and said input shaft (3) is cut off and said secondary pulley (9) is coupled to said output shaft (5).

8. The transmission (1) according to any of claims 1 to 7, wherein said input shaft (3) is coupled to said primary pulley (7) and said first element, respectively, so that the torque direction at said input shaft (3) of the torque transmitted from said primary pulley (7) is in the reverse direction to the torque direction at said input shaft (3) of the torque transmitted from said first element during the drive state.

9. The transmission (1) according to any of claims 1 to 8,
wherein said output shaft (5) produces output in the normal and reverse directions with a neutral position placed therebetween in which output rotational speed becomes zero by changing the pulley ratio of said belt type continuously variable transmission (11).

10. The transmission (1) according to claim 7, 8, or 9, wherein
when said switching means for low speed mode and high speed mode selects said low speed mode, said output shaft (5) is changed sequentially in the reverse rotation, the neutral position and the normal rotational overdrive by changing the pulley ratio of said belt type continuously variable transmission (11) toward an underdrive direction and, when said switching means selects said high speed mode said output shaft (15) is changed in the normal rotational overdrive direction by changing the pulley ratio of said belt type continuously variable transmission (11) toward an overdrive direction.

11. The transmission (1) according to any of claims 1 to 10,
wherein:
said planetary gear unit (19) is a single pinion planetary gearing;
said third rotary element is either a sun gear or a ring gear; and
said first and second rotary elements are the other of the sun gear and the ring gear and a carrier and rotate in the same direction.

12. The transmission (1) according to any of claims 1 to 10,
wherein:
said planetary gear unit (19) is a dual pinion planetary gearing;
said third rotary element is either a sun gear or a carrier; and
said first and second rotary elements are the other of the sun gear and the carrier and a ring gear and rotate in the same direction.

13. The transmission (1) according to any of claims 1 to 10,
wherein:
said planetary gear unit (19) is a single pinion planetary gearing;
said third rotary element'is a carrier; and
said first and second rotary elements are a sun gear and a ring gear and rotate in the opposite direction to each other.

14. The transmission (1) according to any of claims 1 to 10,
wherein:
said planetary gear unit (19) is a dual pinion planetary gearing;
said third rotary element is a ring gear; and
said first and second rotary elements are a sun gear and a carrier and rotate in the opposite direction to each other.

## Patentansprüche

1. Stufenloses Getriebe (1) mit:
einer Antriebswelle (3), die in Verbindung mit einer Motorabtriebswelle (2) betriebsfähig ist;
einer Abtriebswelle (5), die in Verbindung mit Rädern betriebsfähig ist;
einem stufenlosen Riemengetriebe (11) mit: einer Primärriemenscheibe (7), die in Verbindung mit der Antriebswelle (3) betriebsfähig ist; einer Sekundärriemenscheibe (9); einem Riemen (10), der um beide Riemenscheiben (7, 9) gewickelt ist; und einer Axialkraftstelleinrichtung (32, 33) zum Aufbringen von Axialkräften auf beide Riemenscheiben (7, 9), um das Riemenscheibenübersetzungsverhältnis zwischen der Primär- und Sekundärriemenscheibe (7, 9) zu ändern;
einer Planetengetriebeeinheit (19) mit mindestens einem ersten, zweiten und dritten Drehelement (19s, 19c, 19r), wobei das erste Drehelement, das zweite Drehelement und das dritte Drehelement in Verbindung mit der Antriebswelle (3), der Sekundärriemenscheibe (9) bzw. der Abtriebswelle (5) betriebsfähig sind; so daß die Drehmomentübertragungsrichtung zwischen beiden Riemenscheiben (7, 9) sowie die Abtriebsdrehmomentrichtung der Abtriebswelle (5) auf der Grundlage der Änderung des Riemenscheibenübersetzungsverhältnisses in dem stufenlosen Riemengetriebe (11) geändert wird, **gekennzeichnet durch**
eine Entscheidungseinrichtung zum Entscheiden, auf der Grundlage eines Signals von einer Ermittlungseinrichtung zum Ermitteln eines Fahrzeugantriebszustands, ob er in einem Zustand ist, in dem das Abtriebsdrehmoment der Abtriebswelle (5) erforderlich ist; und
eine Steuereinrichtung (54) zum Umschalten, auf der Grundlage der Entscheidungseinrichtung, der Axialkraftstelleinrichtung (32, 33), um während eines Antriebszustands, der das Abtriebsdrehmoment erfordert, eine Differenz zu erzeugen, um ein Sollriemenscheibenübersetzungsverhältnis **durch** die Axialkräfte zu erreichen, die auf die Primär- und Sekundärriemenscheibe (7, 9) ausgeübt werden, und um während eines antriebsfreien Zustands, der kein Abtriebsdrehmoment erfordert, die Axialkräfte auszugleichen, die auf die Primär- und Sekundärriemenscheibe (7, 9) ausgeübt werden,
wobei:
die Axialkraftstelleinrichtung (32, 33) ein primäres Hydraulikservo (32), das auf die Primärriemenscheibe (7) wirkt, und ein sekundäres Hydraulikservo (33), das auf die Sekundärriemenscheibe (9) wirkt, aufweist;
jedes des primären und sekundären Hydraulikservos (32, 33) mehrere Hydraulikkammern (45, 46, 47, 49) aufweist; und
die Steuereinrichtung (54) effektive Druckaufnahmeflächen des primären und sekundären Hydraulikservos (32, 33) **durch** selektives Umschalten von Hydraulikdurchgängen (50-53) zu den jeweiligen Hydraulikkammern (45, 46, 47, 49), ändert, um zu bewirken, daß die effektiven Druckaufnahmeflächen beider Hydraulikservos (32, 33) während des Antriebszustands unterschiedlich und während des antriebsfreien Zustands gleich sind.

2. Stufenloses Getriebe (1) nach Anspruch 1, wobei:
jedes der primären und sekundären Hydraulikservos (32, 33) mindestens eine primäre Hydraulikkammer (45, 46) und eine sekundäre Hydraulikkammer (47, 49) aufweist;
die primären Hydraulikkammern (45, 46) beider Hydraulikservos (32, 33) die gleiche effektive Druckaufnahmefläche haben; die Steuereinrichtung (54) ein Regelventil (56) und ein Verhältnissteuerventil (57) zum Steuern des Hydraulikdrucks aufweist, der den primären und sekundären Hydraulikkammern (45, 46, 47, 49) zugeführt wird;
der Hydraulikdruck von dem Regelventil (56) normalerweise den primären Hydraulikkammern (45, 46) beider Hydraulikservos (32, 33) zugeführt wird; und
der Hydraulikdruck von dem Verhältnissteuerventil (57) irgendeiner der sekundären Hydraulikkammern (47, 49) beider Hydraulikservos (32, 33) während des Antriebszustands zugeführt wird und aus den sekundären Hydraulikkammern (47, 49) beider Hydraulikservos (32, 33) während des antriebsfreien Zustands abgelassen wird.

3. Stufenloses Getriebe (1) mit:
einer Antriebswelle (3), die in Verbindung mit einer Motorabtriebswelle (2) betriebsfähig ist;
einer Abtriebswelle (5), die in Verbindung mit Rädern betriebsfähig ist;
einem stufenlosen Riemengetriebe (11) mit: einer Primärriemenscheibe (7), die in Verbindung mit der Antriebswelle (3) betriebsfähig ist; einer Sekundärriemenscheibe (9); einem Riemen (10), der um beide Riemenscheiben (7, 9) gewickelt ist; und einer Axialkraftstelleinrichtung (32, 33) zum Aufbringen von Axialkräften auf beide Riemenscheiben (7, 9), um das Riemenscheibenübersetzungsverhältnis zwischen der Primär- und Sekundärriemenscheibe (7, 9) zu ändern;
einer Planetengetriebeeinheit (19) mit mindestens einem ersten, zweiten und dritten Drehelement (19s, 19c, 19r), wobei das erste Drehelement, das zweite Drehelement und das dritte Drehelement in Verbindung mit der Antriebswelle (3), der Sekundärriemenscheibe (9) bzw. der Abtriebswelle (5) betriebsfähig sind; so daß die Drehmomentübertragungsrichtung zwischen beiden Riemenscheiben (7, 9) sowie die Abtriebsdrehmomentrichtung der Abtriebswelle (5) auf der Grundlage der Änderung des Riemenscheibenübersetzungsverhältnisses in dem stufenlosen Riemengetriebe (11) geändert wird, **gekennzeichnet durch**
eine Entscheidungseinrichtung zum Entscheiden, auf der Grundlage eines Signals von einer Ermittlungseinrichtung zum Ermitteln eines Fahrzeugantriebszustands, ob es in einem Zustand ist, in dem das Abtriebsdrehmoment der Abtriebswelle (5) erforderlich ist; und
eine Steuereinrichtung (54) zum Umschalten, auf der Grundlage der Entscheidungseinrichtung, der Axialkraftstelleinrichtung (32, 33), um während eines Antriebszustands, der das Abtriebsdrehmoment erfordert, eine Differenz zu erzeugen, um ein Sollriemenscheibenübersetzungsverhältnis **durch** die Axialkräfte zu erreichen, die auf die Primär- und Sekundärriemenscheibe (7, 9) ausgeübt werden, und um während eines antriebsfreien Zustands, der kein Abtriebsdrehmoment erfordert, die Axialkräfte auszugleichen, die auf die Primär- und Sekundärriemenscheibe (7, 9) ausgeübt werden,
wobei: die Axialkraftstelleinrichtung (32, 33) ein primäres Hydraulikservo (32), das auf die Primärriemenscheibe (7) wirkt, und ein sekundäres Hydraulikservo (33), das auf die Sekundärriemenscheibe (9) wirkt, aufweist;
das primäre und sekundäre Hydraulikservo (32, 33) entsprechende Hydraulikkammern (73, 75) mit den gleichen Druckaufnahmeflächen aufweisen;
die Steuereinrichtung (54) primäre und sekundäre Regelventile (76, 77) zum Steuern eines Hydraulikdrucks aufweisen, der den Hydraulikkammern (73, 75) zugeführt wird;
während des Antriebszustands der Hydraulikdruck einer der Hydraulikkammern (73, 75) beider Hydraulikservosysteme (32, 33) von dem primären Regelventil (76) zugeführt wird und der anderen der Hydraulikkammern (73, 75) beider Hydraulikservos (32, 33) von dem zweiten Regelventil (77) zugeführt wird; und
während des antriebsfreien Zustands der Hydraulikdruck den Hydraulikkammern (73, 75) beider Hydraulikservos (32, 33) von irgendeinem des primären und sekundären Regelventils (76, 77) zugeführt wird.

4. Stufenloses Getriebe (1) nach Anspruch 3, wobei das primäre Regelventil (76) in Hydraulikkommunikation mit dem sekundären Regelventil (77) ist, so daß der hydraulische Ausgangsdruck von dem primären Regelventil (76) an den Eingang des sekundären Regelventils (76) abgegeben wird und während des antriebsfreien Zustands der Hydraulikwert des hydraulischen Ausgangsdrucks des sekundären Regelventils (77) größer eingestellt wird als der Hydraulikdruck des hydraulischen Ausgangsdrucks des primären Regelventils (76).

5. Stufenloses Getriebe (1) mit:
einer Antriebswelle (3), die in Verbindung mit einer Motorabtriebswelle (2) betriebsfähig ist;
einer Abtriebswelle (5), die in Verbindung mit Rädern betriebsfähig ist;
einem stufenlosen Riemengetriebe (11) mit: einer Primärriemenscheibe (7), die in Verbindung mit der Antriebswelle (3) betriebsfähig ist; einer Sekundärriemenscheibe (9); einem Riemen (10), der um beide Riemenscheiben (7, 9) gewickelt ist; und einer Axialkraftstelleinrichtung (32, 33) zum Aufbringen von Axialkräften auf beide Riemenscheiben (7, 9), um das Riemenscheibenübersetzungsverhältnis zwischen der Primär- und Sekundärriemenscheibe (7, 9) zu ändern;
einer Planetengetriebeeinheit (19) mit mindestens einem ersten, zweiten und dritten Drehelement (19s, 19c, 19r), wobei das erste Drehelement, das zweite Drehelement und das dritte Drehelement in Verbindung mit der Antriebswelle (3), der Sekundärriemenscheibe (9) bzw. der Abtriebswelle (5) betriebsfähig sind; so daß die Drehmomentübertragungsrichtung zwischen beiden Riemenscheiben (7, 9) sowie die Abtriebsdrehmomentrichtung der Abtriebswelle (5) auf der Grundlage der Änderung des Riemenscheibenübersetzungsverhältnisses in dem stufenlosen Riemengetriebe (11) geändert wird, **gekennzeichnet durch**
eine Entscheidungseinrichtung zum Entscheiden, auf der Grundlage eines Signals von einer Ermittlungseinrichtung zum Ermitteln eines Fahrzeugantriebszustands, ob er in einem Zustand ist, in dem das Abtriebsdrehmoment der Abtriebswelle (5) erforderlich ist; und
einer Steuereinrichtung (54) zum Umschalten, auf der Grundlage der Entscheidungseinrichtung, der Differenz zwischen den Axialkräften an der Primär- und Sekundärriemenscheibe (7, 9), die von der Axialkraftstelleinrichtung (32, 33) erzeugt werden, während eines Antriebszustands, der das Abtriebsdrehmoment erfordert, auf einen Wert, um ein Sollriemenscheibenübersetzungsverhältnisses in bezug auf das Antriebsdrehmoment des stufenlosen Riemengetriebes (11) zu dieser Zeit zu erreichen, und während eines antriebsfreien Zustands, der kein Abtriebsdrehmoment erfordert, auf einen kleineren Wert innerhalb eines Bereichs, der eine Beziehung zwischen den Größen der Axialkräfte an der Primär- und Sekundärriemenscheibe (7, 9) nicht umkehrt, als die Differenz zwischen den Axialkräften an der Primär- und der Sekundärriemenscheibe (7, 9), die vom Antriebsdrehmoment und vom Riemenscheibenübersetzungsverhältnis des stufenlosen Riemengetriebes (11) zu dieser Zeit bestimmt werden, wenn die Abtriebsdrehmomentrichtung der Abtriebswelle (5) positiv ist, oder auf einen kleineren Wert innerhalb eines Bereichs, der eine Beziehung zwischen den Beträgen der Axialkräfte auf der Primär- und der Sekundärriemenscheibe (7, 9) nicht umkehrt, als die Differenz zwischen den Axialkräften an der Primär- und der Sekundärriemenscheibe (7, 9), die vom Antriebsdrehmoment und vom Riemenscheibenübersetzungsverhältnis des stufenlosen Riemengetriebes (11) zu dieser Zeit bestimmt wird, wenn die Abtriebsdrehmomentrichtung der Abtriebswelle (5) negativ ist.

6. Stufenloses Getriebe (1) nach einem der Ansprüche 1 bis 5, wobei:
die Ermittlungseinrichtung einen Fahrzeuggeschwindigkeitssensor zum Ermitteln der Fahrzeuggeschwindigkeit und einen Drosselklappensensor zum Ermitteln der Drosselklappenöffnung des Motors aufweist; und
die Entscheidungseinrichtung bestimmt, daß das Abtriebsdrehmoment nicht erforderlich ist, wenn die Fahrzeuggeschwindigkeit auf einer vorbestimmten Größe oder kleiner ist und wenn die Drosselklappenöffnung auf einer vorbestimmten Größe oder kleiner ist.

7. Getriebe (1) nach einem der Ansprüche 1 bis 6, ferner mit einer Umschalteinrichtung für Langsamfahrmodus und Schnellfahrmodus,
wobei, wenn die Umschalteinrichtung den Langsamfahrmodus wählt, das erste Drehelement, das zweite Drehelement und das dritte Drehelement in der Planetengetriebeeinheit (19) in Verbindung mit der Antriebswelle (3), der Sekundärriemenscheibe (9) bzw. der Abtriebswelle (5) betriebsfähig ist und
wobei, wenn die Umschalteinrichtung den Schnellfahrmodus wählt, die Betriebsverbindung zwischen dem ersten Drehelement in der Planetengetriebeeinheit (19) und der Antriebswelle (3) getrennt und die Sekundärriemenscheibe (9) mit der Abtriebswelle (5) gekoppelt wird.

8. Getriebe (1) nach einem der Ansprüche 1 bis 7,
wobei die Antriebswelle (3) mit der Primärriemenscheibe (7) bzw. mit dem ersten Element gekoppelt ist, so daß die Drehmomentrichtung des Drehmoments an der Antriebswelle (3), das von der Primärriemenscheibe (7) übertragen wird, in der umgekehrten Richtung zur Drehmomentrichtung des Drehmoments an der Antriebswelle (3) ist, das von dem ersten Element während des Antriebszustands übertragen wird.

9. Getriebe (1) nach einem der Ansprüche 1 bis 8,
wobei die Abtriebswelle (5) eine Abtriebsleistung in der Normal- und Rückwärtsrichtung mit einer dazwischenliegenden Leerlaufstellung erzeugt, in der die Abtriebsdrehzahl durch Änderung des Riemenscheibenübersetzungsverhältnisses des stufenlosen Riemengetriebes (11) null wird.

10. Getriebe (1) nach Anspruch 7, 8 oder 9, wobei,
wenn die Umschalteinrichtung für Langsamfahrmodus und Schnellfahrmodus den Langsamfahrmodus wählt, die Abtriebswelle (5) durch Änderung des Riemenscheibenübersetzungsverhältnisses des stufenlosen Riemengetriebes (11) zu einer Verlangsamungsrichtung nacheinander in die Rückwärtsdrehung, die Leerlaufstellung und die beschleunigte Normaldrehung wechselt, und wenn die Umschalteinrichtung den Schnellfahrmodus wählt, die Abtriebswelle (5) durch Änderung des Riemenscheibenübersetzungsverhältnisses des stufenlosen Riemengetriebes (11) zu einer Beschleunigungsrichtung in die beschleunigte Normaldrehrichtung wechselt.

11. Getriebe (1) nach einem der Ansprüche 1 bis 10, wobei:
die Planetengetriebeeinheit (19) ein Planetengetriebe mit einem einzigen Planetenradsatz ist;
das dritte Drehelement entweder ein Sonnenrad oder ein Hohlrad ist; und
das erste und zweite Drehelement das jeweils andere, nämlich das Sonnenrad oder das Hohlrad, und ein Träger sind und sich in der gleichen Richtung drehen.

12. Getriebe (1) nach einem der Ansprüche 1 bis 10,
wobei:
die Planetengetriebeeinheit (19) ein Planetengetriebe mit zwei Planetenradsätzen ist;
das dritte Drehelement entweder ein Sonnenrad oder ein Träger ist; und
das erste und zweite Drehelement das jeweils andere, nämlich das Sonnenrad oder der Träger, und ein Hohlrad sind und sich in der gleichen Richtung drehen.

13. Getriebe (1) nach einem der Ansprüche 1 bis 10,
wobei:
die Planetengetriebeeinheit (19) ein Planetengetriebe mit einem einzigen Planetenradsatz ist;
das dritte Drehelement ein Träger ist; und
das erste und zweite Drehelement ein Sonnenrad und ein Hohlrad sind und sich in entgegengesetzter Richtung zueinander drehen.

14. Getriebe (1) nach einem der Ansprüche 1 bis 10,
wobei:
die Planetengetriebeeinheit (19) ein Planetengetriebe mit zwei Planetenradsätzen ist;
das dritte Drehelement ein Hohlrad ist; und
das erste und zweite Drehelement ein Sonnenrad und ein Träger sind und sich in entgegengesetzter Richtung zueinander drehen.

## Revendications

1. Transmission à rapport variable en continu (1) comprenant :
un arbre d'entrée (3) fonctionnant en association avec un arbre de sortie de moteur (2) ;
un arbre de sortie (5) fonctionnant en association avec des roues ;
une transmission à rapport variable en continu du type à courroie (11) comportant : une poulie primaire (7) fonctionnant en association avec ledit arbre d'entrée (3) ; une poulie secondaire (9) ; une courroie (10) enroulée autour des deux poulies (7, 9) ; et des moyens d'application de forces axiales (32, 33) pour appliquer des forces axiales aux deux poulies (7, 9) pour changer le rapport de poulie entre lesdites poulies primaire et secondaire (7, 9) ;
une unité d'engrenages planétaires (19) comportant au moins des premier, deuxième et troisième éléments rotatifs (19s, 19c, 19r), dans laquelle ledit premier élément rotatif, ledit deuxième élément rotatif et ledit troisième élément rotatif fonctionnent en association avec ledit arbre d'entrée (3), ladite poulie secondaire (9), et ledit arbre de sortie (5), respectivement ; de telle sorte que la direction de transmission de couple soit changée entre les deux poulies (7, 9) et que, de même, la direction de couple de sortie dudit arbre de sortie (5) soit changée en fonction du changement du rapport de poulie dans ladite transmission à rapport variable en continu du type à courroie (11) ; **caractérisée par** :
des moyens d'estimation pour estimer, en fonction d'un signal venant de moyens de détection pour détecter l'état d'entraînement du véhicule, s'il est dans un état dans lequel le couple de sortie dudit arbre de sortie (5) est requis ; et
des moyens de commande (54) pour commuter, en fonction desdits moyens d'estimation, lesdits moyens d'application de forces axiales (32, 33) de façon à, durant un état d'entraînement nécessitant le couple de sortie, produire une différence pour obtenir un rapport de poulie visé grâce aux forces axiales exercées sur les poulies primaire et secondaire (7, 9), et de façon à, durant un état de non-entraînement ne nécessitant pas le couple de sortie, égaliser les forces axiales exercées sur les poulies primaire et secondaire (7,9) ;
dans laquelle :
lesdits moyens d'application de forces axiales (32, 33) comprennent un dispositif d'asservissement hydraulique primaire (32) agissant sur la poulie primaire (7) et un dispositif d'asservissement hydraulique secondaire (33) agissant sur ladite poulie secondaire (9) ;
chacun desdits dispositifs d'asservissement hydrauliques primaire et secondaire (32, 33) comprend une pluralité de chambres hydrauliques (45, 46, 47, 49) ; et
lesdits moyens de commande (54) changent les surfaces de réception de pression efficace desdits dispositifs d'asservissement hydrauliques primaire et secondaire (32, 33) en commutant sélectivement des passages hydrauliques (50 à 53) vers lesdites chambres hydrauliques respectives (45, 46, 47, 49) de façon à rendre les surfaces de réception de pression efficaces des deux dispositifs d'asservissement hydrauliques (32, 33) différentes durant l'état d'entraînement et égales durant l'état de non-entraînement.

2. Transmission à rapport variable en continu (1) selon la revendication 1, dans laquelle :
chacun desdits dispositifs d'asservissement hydrauliques primaire et secondaire (32, 33) comprend au moins une chambre hydraulique primaire (45, 46) et une chambre hydraulique secondaire (47, 49) ;
lesdites chambres hydrauliques primaires (45, 46) des deux dispositifs d'asservissement hydrauliques (32, 33) ont la même surface de réception de pression efficace ; lesdits moyens de commande (54) comprennent une vanne de régulateur (56) et une vanne de commande de rapport (57) pour commander la pression hydraulique délivrée auxdites chambres hydrauliques primaire et secondaire (45, 46, 47, 49) ;
la pression hydraulique venant de ladite vanne de régulateur (56) est normalement délivrée auxdites chambres hydrauliques primaires (45, 46) des deux dispositifs d'asservissement hydrauliques (32, 33) ; et
la pression hydraulique venant de ladite vanne de commande de rapport (57) est délivrée à l'une ou l'autre desdites chambres hydrauliques secondaires (47, 49) des deux dispositifs d'asservissement hydrauliques (32, 33) durant l'état d'entraînement et est déchargée desdites chambres hydrauliques secondaires (47, 49) des deux dispositifs d'asservissement hydrauliques (32, 33) durant l'état de non-entraînement.

3. Transmission à rapport variable en continu (1) comprenant :
un arbre d'entrée (3) fonctionnant en association avec un arbre de sortie de moteur (2) ;
un arbre de sortie (5) fonctionnant en association avec des roues ;
une transmission à rapport variable en continu du type à courroie (11) comprenant : une poulie primaire (7) fonctionnant en association avec ledit arbre d'entrée (3) ; une poulie secondaire (9) ; une courroie (10) enroulée autour des deux poulies (7, 9) ; et des moyens d'application de forces axiales (32, 33) pour appliquer des forces axiales aux deux poulies (7, 9) afin de changer le rapport de poulie entre lesdites poulies primaire et secondaire (7, 9) ;
une unité d'engrenages planétaires (19) comportant au moins des premier, deuxième et troisième éléments rotatifs (19s, 19c, 19r), dans laquelle ledit premier élément rotatif, ledit deuxième élément rotatif et ledit troisième élément rotatif fonctionnent en association avec ledit arbre d'entrée (3), ladite poulie secondaire (9), et ledit arbre de sortie (5), respectivement ; de telle sorte que la direction de transmission de couple soit changée entre les deux poulies (7, 9), et que, de même, la direction de couple de sortie dudit arbre de sortie (5) soit changée en fonction du changement du rapport de poulie dans ladite transmission à rapport variable en continu du type à courroie (11) ; **caractérisée par** :
des moyens d'estimation pour estimer, en fonction d'un signal venant de moyens de détection pour détecter l'état d'entraînement du véhicule, s'il est dans un état dans lequel le couple de sortie dudit arbre de sortie (5) est requis ; et
des moyens de commande (54) pour commuter, en fonction desdits moyens d'estimation, lesdits moyens d'application de forces axiales (32, 33) de façon à, durant un état d'entraînement nécessitant le couple de sortie, produire une différence pour obtenir un rapport de poulie visé grâce aux forces axiales exercées sur les poulies primaire et secondaire (7, 9) , et de façon à, durant un état de non-entraînement ne nécessitant pas le couple de sortie, égaliser les forces axiales exercées sur les poulies primaire et secondaire (7,9) ;
dans laquelle :
lesdits moyens d'application de forces axiales (32, 33) comprennent un dispositif d'asservissement hydraulique primaire (32) agissant sur ladite poulie primaire (7) et un dispositif d'asservissement hydraulique secondaire (33) agissant sur ladite poulie secondaire (9) ;
lesdits dispositifs d'asservissement hydrauliques primaire et secondaire (32, 33) comprennent des chambres hydrauliques respectives (73, 75) ayant des surfaces de réception de pression identiques ;
lesdits moyens de commande (54) comprennent des vannes de régulateur primaire et secondaire (76, 77) pour commander la pression hydraulique délivrée auxdites chambres hydrauliques (73, 75) ;
durant l'état d'entraînement, la pression hydraulique est délivrée à l'une desdites chambres hydrauliques (73, 75) des deux dispositifs d'asservissement hydrauliques (32, 33) à partir de ladite vanne de régulateur primaire (76) et à l'autre des chambres hydrauliques (73, 75) des deux dispositifs d'asservissement hydrauliques (32, 33) à partir de ladite deuxième vanne de régulateur (77) ; et
durant l'état de non-entraînement, la pression hydraulique est délivrée auxdites chambres hydrauliques (73, 75) des deux dispositifs d'asservissement hydrauliques (32, 33) à partir de l'une ou l'autre desdites vannes de régulateur primaire et secondaire (76, 77).

4. Transmission à rapport variable en continu (1) selon la revendication 3, dans laquelle ladite vanne de régulateur primaire (76) est en communication hydraulique avec ladite vanne de régulateur secondaire (77) de telle sorte que la pression hydraulique de sortie de ladite vanne de régulateur primaire (76) soit délivrée à l'entrée de ladite vanne de régulateur secondaire (77), et que, durant l'état de non-entraînement, la valeur hydraulique de la pression hydraulique de sortie de ladite vanne de régulateur secondaire (77) soit établie à une valeur supérieure à la pression hydraulique de la pression hydraulique de sortie de ladite vanne de régulateur primaire (76).

5. Transmission à rapport variable en continu (1) comprenant :
un arbre d'entrée (3) fonctionnant en association avec un arbre de sortie de moteur (2) ;
un arbre de sortie (5) fonctionnant en association avec des roues ;
une transmission à rapport variable en continu du type à courroie (11) comportant : une poulie primaire (7) fonctionnant en association avec ledit arbre d'entrée (3) ; une poulie secondaire (9) ; une courroie (10) enroulée autour des deux poulies (7, 9) ; et des moyens d'application de forces axiales (32, 33) pour appliquer des forces axiales aux deux poulies (7, 9) pour changer le rapport de poulie entre lesdites poulies primaire et secondaire (7, 9) ;
une unité d'engrenages planétaires (19) comportant au moins des premier, deuxième et troisième éléments rotatifs (19s, 19c, 19r), dans laquelle ledit premier élément rotatif, ledit deuxième élément rotatif et ledit troisième élément rotatif fonctionnent en association avec ledit arbre d'entrée (3), ladite poulie secondaire (9), et ledit arbre de sortie (5), respectivement ; de telle sorte que la direction de transmission de couple soit changée entre les deux poulies (7, 9), et que, de même, la direction de couple de sortie dudit arbre de sortie (5) soit changée en fonction du changement du rapport de poulie dans ladite transmission à rapport variable en continu du type à courroie (11) ; **caractérisée par** :
des moyens d'estimation pour estimer, en fonction d'un signal venant de moyens de détection pour détecter l'état d'entraînement du véhicule, s'il est dans un état dans lequel le couple de sortie dudit arbre de sortie (5) est requis ; et
des moyens de commande (54) pour commuter, en fonction desdits moyens d'estimation, la différence entre les forces axiales sur lesdites poulies primaire et secondaire (7,9) produite par lesdits moyens d'application de forces axiales (32, 33), durant un état d'entraînement nécessitant le couple de sortie, à une valeur permettant d'atteindre un rapport de poulie visé vis-à-vis du couple d'entrée de ladite transmission à rapport variable en continu du type à courroie (11) à ce moment, et, durant un état de non-entraînement ne nécessitant pas le couple de sortie, à une valeur à l'intérieur d'une plage n'inversant pas une relation entre les quantités des forces axiales sur lesdites poulies primaire et secondaire (7, 9), qui est inférieure à la différence entre les forces axiales sur lesdites poulies primaire et secondaire (7, 9) déterminée par le couple d'entrée et le rapport de poulie de ladite transmission à rapport variable en continu du type à courroie (11) au moment où la direction du couple de sortie dudit arbre de sortie (5) est positive, ou une valeur à l'intérieur d'une plage n'inversant pas une relation entre les quantités des forces axiales sur lesdites poulies primaire et secondaire (7, 9), qui est inférieure à la différence entre les forces axiales sur lesdites poulies primaire et secondaire (7, 9) déterminée par le couple d'entrée et le rapport de poulie de ladite transmission à rapport variable en continu du type à courroie (11) au moment où la direction du couple de sortie dudit arbre de sortie (5) est négative.

6. Transmission à rapport variable en continu (1) selon l'une quelconque des revendications 1 à 5,
dans laquelle :
lesdits moyens de détection comprennent un détecteur de vitesse de véhicule pour détecter la vitesse du véhicule et un détecteur d'accélérateur pour détecter l'ouverture d'accélérateur du moteur ; et
lesdits moyens d'estimation déterminent que le couple de sortie n'est pas requis lorsque la vitesse du véhicule est inférieure ou égale à une valeur prédéterminée et lorsque l'ouverture d'accélérateur est inférieure ou égale à une valeur prédéterminée.

7. Transmission (1) selon l'une quelconque des revendications 1 à 6, comprenant de plus des moyens de commutation pour un mode de vitesse basse et un mode de vitesse haute,
dans laquelle, lorsque lesdits moyens de commutation sélectionnent ledit mode de vitesse basse, ledit premier élément rotatif, ledit deuxième élément rotatif et ledit troisième élément rotatif dans ladite unité d'engrenages planétaires (19) fonctionnent en association avec ledit arbre d'entrée (3), ladite poulie secondaire (9) et ledit arbre de sortie (5), respectivement, et
dans laquelle, lorsque lesdits moyens de commutation sélectionnent ledit mode de vitesse haute, l'association opérationnelle entre ledit premier élément rotatif dans ladite unité d'engrenages planétaires (19) et ledit arbre d'entrée (3) est interrompue et ladite poulie secondaire (9) est couplée audit arbre de sortie (5).

8. Transmission (1) selon l'une quelconque des revendications 1 à 7, dans laquelle ledit arbre d'entrée (3) est couplé à ladite poulie primaire (7) et audit premier élément, respectivement, de telle sorte que la direction de couple sur ledit arbre d'entrée (3) du couple transmis à partir de ladite poulie primaire (7) soit en sens inverse de la direction de couple sur ledit arbre d'entrée (3) du couple transmis à partir dudit premier élément durant l'état d'entraînement.

9. Transmission (1) selon l'une quelconque des revendications 1 à 8, dans laquelle ledit arbre de sortie (5) produit une sortie dans les directions normale et inverse, avec une position neutre disposée entre elles dans laquelle la vitesse de rotation de sortie devient nulle par changement du rapport de poulie de ladite transmission à rapport variable en continu du type à courroie (11).

10. Transmission (1) selon la revendication 7, 8 ou 9, dans laquelle, lorsque lesdits moyens de commutation pour le mode de vitesse basse et le mode de vitesse haute sélectionnent ledit mode de vitesse basse, ledit arbre de sortie (5) est changé en séquence dans la rotation inverse, la position neutre et la surmultipliée en rotation normale par changement du rapport de poulie de ladite transmission à rapport variable en continu du type à courroie (11) vers une direction de sous-multipliée, et, lorsque lesdits moyens de commutation sélectionnent ledit mode de vitesse haute, ledit arbre de sortie (5) est changé de la direction de surmultipliée de rotation normale par changement du rapport de poulie de ladite transmission à rapport variable en continu du type à courroie (11) vers une direction de surmultipliée.

11. Transmission (1) selon l'une quelconque des revendications 1 à 10, dans laquelle :
ladite unité d'engrenages planétaires (19) est un ensemble d'engrenages planétaires à pignon unique ;
ledit troisième élément rotatif est soit une roue solaire soit une couronne de train planétaire ; et
lesdits premier et deuxième éléments rotatifs sont l'autre parmi la roue solaire et la couronne de train planétaire et un porteur, et tournent dans la même direction.

12. Transmission (1) selon l'une quelconque des revendications 1 à 10, dans laquelle :
ladite unité d'engrenages planétaires (19) est un ensemble d'engrenages planétaires à double pignon ;
ledit troisième élément rotatif est soit une roue solaire soit un porteur ; et
lesdits premier deuxième éléments rotatifs sont l'autre parmi la roue solaire et le porteur et une couronne de train planétaire, et tournent dans la même direction.

13. Transmission (1) selon l'une quelconque des revendications 1 à 10, dans laquelle :
ladite unité d'engrenages planétaires (19) est un ensemble d'engrenages planétaires à pignon unique ;
ledit troisième élément rotatif est un porteur ; et
lesdits premier et deuxième éléments rotatifs sont une roue solaire et une couronne de train planétaire, et tournent dans une direction opposée l'un à l'autre.

14. Transmission (1) selon l'une quelconque des revendications 1 à 10, dans laquelle :
ladite unité d'engrenages planétaires (19) est un ensemble d'engrenages planétaires à double pignon ;
ledit troisième élément rotatif est une couronne de train planétaire ; et
lesdits premier et deuxième éléments rotatifs sont une roue solaire et un porteur, et tournent dans une direction opposée l'un à l'autre.
